(19) Europäisches Patentamt
European Patent Office
Office européen des brevets

(11) Publication number: **0 039 155**
**B1**

(12) **EUROPEAN PATENT SPECIFICATION**

(45) Date of publication of patent specification: **09.10.85**

(51) Int. Cl.$^4$: **C 08 L 67/02**

(21) Application number: **81301533.6**

(22) Date of filing: **08.04.81**

(54) **Polyester molding composition, production thereof and molded articles produced therefrom.**

(30) Priority: **08.04.80 JP 45954/80**
**30.09.80 JP 136048/80**
**22.11.80 JP 164775/80**
**22.11.80 JP 164776/80**
**22.11.80 JP 164777/80**

(43) Date of publication of application:
**04.11.81 Bulletin 81/44**

(45) Publication of the grant of the patent:
**09.10.85 Bulletin 85/41**

(84) Designated Contracting States:
**AT BE CH DE FR GB IT LI LU NL SE**

(58) References cited:
**FR-A-2 280 680**
**US-A-4 066 587**

**The file contains technical information submitted after the application was filed and not included in this specification**

(73) Proprietor: **Asahi Kasei Kogyo Kabushiki Kaisha**
**2-6, Dojimahama 1-chome Kita-ku**
**Osaka-shi Osaka 530 (JP)**

(72) Inventor: **Nakamura, Katsuyuki**
**No. 4920, Nakagawara-cho 2-chome Nobeoka-shi**
**Miyazaki (JP)**
Inventor: **Neki, Kazuya**
**No. 15-4, Nakata 1-chome Shizuoka-shi**
**Shizuoka (JP)**

(74) Representative: **Blake, John Henry Francis**
**BROOKES AND MARTIN High Holborn House**
**52/54 High Holborn**
**London WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 155 B1

**Description**

This invention relates to a polyester composition for molding having improved molding properties, and, more particularly, to a polyester composition having an improved polyethylene terephthalate-crystallizing rate and which is capable of providing moldings having an excellent surface and excellent physical properties even at a low mold temperature.

Polyethylene terephthalate has been used for various products such as fibers and films, due to its excellent heat resistance, chemical resistance, electric characteristics, etc. However, in the case of using it for injection-molded plastic products, the molding work involves many limitations due to its peculiar crystallization behavior. Thus, it has been found to be seriously restricted in molding applications in spite of its excellent characteristics, because polyethylene terephthalate is an essentially crystalline polymer with a slow crystallizing rate.

This can be understood from the fact that polyethylene terephthalate shows a broad crystallization exothermic peak measured by means of a differential scanning calorimeter (DSC) under cooling conditions with a half width of the exothermic peak in a crystallization temperature range being about 20°C even when cooled at a slow rate of 10°C/min, and more than 30°C when cooled at a considerably rapid cooling rate. Therefore, in the case of molding it using an ordinary metal mold at 70—110°C employed for ordinary molding, once-molded polyethylene terephthalate is cooled at a rate as fast as 300—400°C/min in portions in contact with the metal mold surface, and hence it is cooled and solidified almost without crystallization, thus not providing homogeneous moldings having good physical properties. For example, there result moldings having seriously poor form stability and having pock marks on the surface thereof.

Thus, conventional moldings of polyethylene terephthalate has required a special high-temperature metal mold maintained at 140°C or higher, preferably 150°C or higher. Such high metal mold temperature prolongs the molding cycle so much that it is a minus factor in view of productivity.

Various approaches have so far been proposed to remove the above-described defects by accelerating crystallization of polyethylene terephthalate. For example, Japanese Patent Publication No. 7542/69 discloses a process of accelerating the crystallization by compounding about 0.2 to 2 wt % of a nucleating agent comprising inorganic particles of, typically, talc. Also, Japanese Patent Publication No. 4097/73 discloses a process of compounding an alkali metal salt of organic carboxylic acid. However, these nucleating agents to be compounded in these processes scarcely accelerate crystallization of polyethylene terephthalate at a low temperature though it accelerates the crystallization to some extent at around 200°C and, as a result, the metal mold temperature for molding the composition still must be maintained at a level as high as 140°C or higher.

Japanese Patent Application (OPI) No. 158,452/79 discloses a composition wherein polyethylene terephthalate is compounded with glass fiber, a sodium salt of an organic carboxylic acid, and a low-molecular weight organic ester type plasticizer. This composition accelerates crystallization of polyethylene terephthalate at a low temperature. However, when subjected to injection molding, it forms deposits on a metal mold cavity, so-called "mold deposits" and, when the temperature of molten resin is raised to 275°C or higher, there results resin scorch. These defects seem to result from the poor heat resistance of the sodium salt of an organic carboxylic acid such as ionomer and the poor compatibility between the low-molecular weight organic ester type plasticizers such as neopentyl glycol dibenzoate and polyethylene terephthalate.

Therefore, a further improvement has been desired as to molding properties.

U.S. Patent No. 4066587 discloses that the flow properties of thermoplastic polyesters can be improved by the addition of certain polyamides. The polyamides have a softening point of 100 to 240°C. The improved flow properties allow the thermoplastic polyesters to be extruded at lower temperatures than hitherto.

French Published Patent Application No. 2280680 is concerned with injection molding of polybutylene terephthalate, which is very suitable for such molding because of its high crystallization rate. It is disclosed that the accumulation of static charges can be prevented by incorporating certain oxyalkyl polyamides into the polybutylene terephthalate.

As a result of intensive investigations to find a nucleating agent which functions to cause a rapid crystallization of polyethylene terephthalate (shown by the appearance of a sharp crystallization exothermic peak measurable by means of a differential scanning calorimeter (DSC) under cooling conditions) when the temperature reaches a certain level in the course of cooling polyethylene terephthalate starting from a molten state, it has now been found that crystallization of polyethylene terephthalate can be accelerated by combining polyethylene terephthalate with certain types of polyamide or polyhydrazide. Further study has lead to the discovery that the thus obtained composition can be molded even at a low mold temperature. Thus the present invention has been achieved.

The present invention provides a moldable polyester composition comprising:

(A) 100 parts by weight of polyester comprising polyethylene terephthalate and having a reduced specific viscosity ($\eta$ sp/c) of at least 0.3; and

(B) from 0.05 to 10 parts by weight of at least one compound selected from polyamides and polyhydrazides having a melting point of at least 270°C; wherein said component (B) is uniformly dispersed in said component (A) in a size of 50 μm or less, and a half width of an exothermic peak of the polyester

composition measured in a crystallization temperature range by a differential scanning calorimeter at a cooling rate of 10°C/min is 15°C or less per 8 mg of said component (A).

The invention will now be described in more detail, making reference to the accompanying drawing in which the single Figure shows the exothermic peak temperature (Tc) and the half width ($\Delta T$) of an exothermic peak based on crystallization of polyethylene terephthalate measured by a differential scanning calorimeter (DSC).

As the polyester of component (A) comprising polyethylene terephthalate, conventionally known polyesters comprising mainly polyethylene terephthalate, e.g., polyethylene terephthalate homopolymer, copolymers containing at least 70 mol % ethylene terephthalate repeating units, and polyester mixtures containing at least 70 mol % of polyethylene terephthalate can be selected. The polyester is selected from those having a reduced specific viscosity ($\eta$ sp/c) of at least 0.3, depending on the intended end-use.

Component (B) of the present invention functions as a nucleating agent for component (A) and includes polyamides or polyhydrazides which include their homopolymers, random copolymers, block copolymers, and block or graft copolymers with other polymers. In these polyamides, polyhydrazides or copolymers, the polyamides themselves, polyamido moieties thereof, polyamidohydrazides themselves, polyamidohydrazido moieties, polyhydrazides themselves or polyhydrazido moieties have a melting (or decomposition) point of not lower than 270°C, and preferably not lower than 300°C.

These are exemplified by polyamides, polyhydrazides, and copolymers thereof (polyamidohydrazides), formed by at least one of the amido unit represented by the formula (I)

$$—NH—Ar_1—NH—CO—Ar_2—CO— \qquad (I)$$

wherein $Ar_1$ and $Ar_2$ represent a divalent aromatic group; the amide unit represented by the formula (II)

$$—NH—Ar_3—CO— \qquad (II)$$

wherein $Ar_3$ represents a divalent aromatic group; the amido unit represented by the formula (III)

$$—NH—Ar_4—NH—CO—R_1—CO— \qquad (III)$$

wherein $Ar_4$ represents a divalent aromatic group, e.g. a divalent aralkyl group, a divalent cycloalkyl group, a methylene group or an ethylene group, and $R_1$ represents a divalent alkyl group having up to 8 carbon atoms or a divalent cycloalkyl group; the amido unit represented by the formula (IV)

$$—NH—R_2—NH—CO—Ar_5—CO— \qquad (IV)$$

wherein $Ar_5$ represents a divalent aromatic group, e.g. a divalent aralkyl group, a divalent cycloalkyl group, a methylene group or an ethylene group, and $R_2$ represents a divalent alkyl group having up to 10 carbon atoms or a divalent cycloalkyl group; the amido unit represented by the following general formula (V)

$$—NH—R_3—CO— \qquad (V)$$

wherein $R_3$ represents a divalent cycloalkyl group, a divalent aralkyl group, or a cycloalkylmethylene group; the hydrazido unit represented by the formula (VI)

$$—NHNH—CO—Ar_6—CO— \qquad (VI)$$

wherein $Ar_6$ represents a divalent aromatic group, a divalent cycloalkyl group and the amido unit represented by the formula (VII)

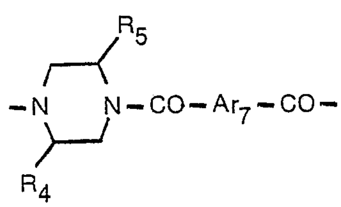
(VII)

wherein $Ar_7$ represents a divalent aromatic group, a $R_4$ and $R_5$ each represents hydrogen or a methyl group.

Examples of divalent aromatic group represented by $Ar_1$, $Ar_2$, $Ar_3$ or $Ar_7$ in general formula (I), (II) or (VII) and $Ar_4$, $Ar_5$ or $Ar_6$ in formula (III), (IV) or (VI), include p-phenylene, m-phenylene, 4,4'-biphenylene, 3,4'-biphenylene, 1,3-naphthylene, 1,4-naphthylene, 1,5-naphthylene, 1,6-naphthylene, 1,7-naphthylene, 2,6-naphthylene, 2,5-pyridylene, 2,4-pyridylene,

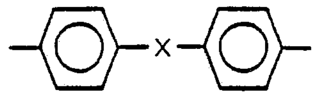

(wherein X represents $-CH_2-$, $-O-$, $-NH-$, $-CO-$, $-SO_2-$),

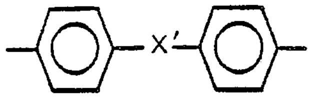

(wherein X' represents $-CH_2-CH_2-$, $-N=N-$, $-\underset{\underset{O}{\downarrow}}{N}-N-$, $-\underset{\underset{O}{\|}}{C}-O-$, $-CH=N$ or $-O-CH_2CH_2O-$).,

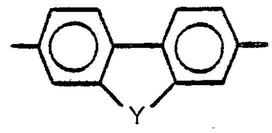

(wherein Y represents $-SO_2-$, $-CO-$, or $-CH_2-$). One, two, or more of these can be selected for use. The aromatic moiety thereof may have one or more inert substituents such as a halogen atom, an alkyl group, an alkoxy group, a nitro group, and a cyano group as nuclear substituents.

Examples of divalent aralkyl group represented by $Ar_4$, $Ar_5$ or $R_3$ in general formula (III), (IV) or (V) include

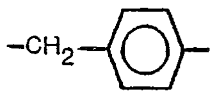 , 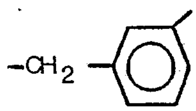 , 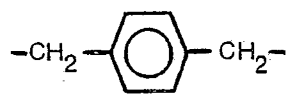 , 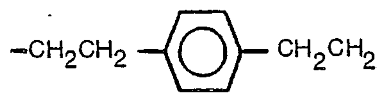 ,

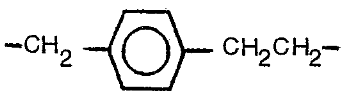 .

Examples of the amido unit represented by the formula (I) include:

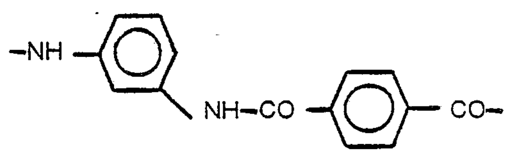 ,

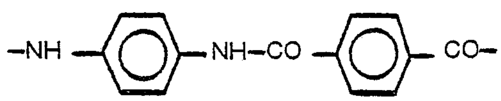 ,

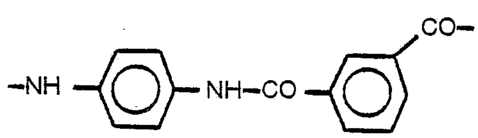 ,

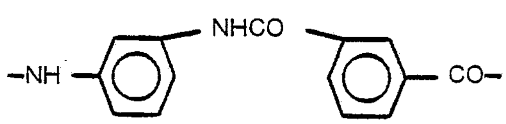 ,

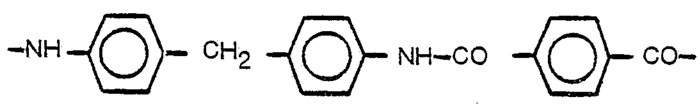 ,

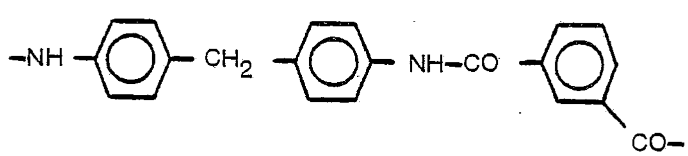 ,

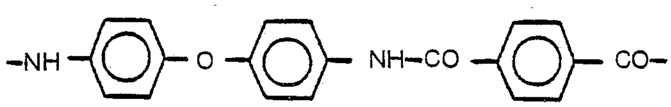 ,

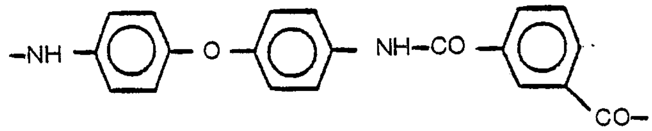 ,

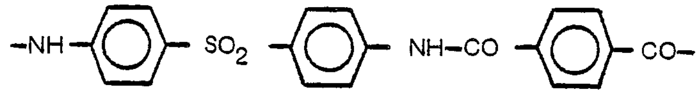 ,

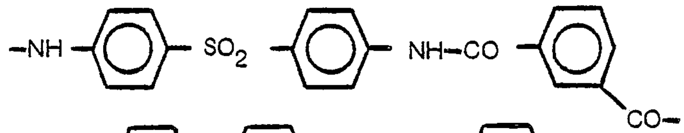 ,

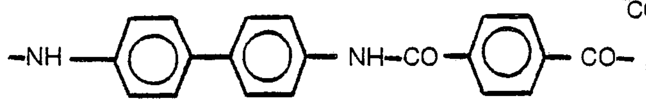 ,

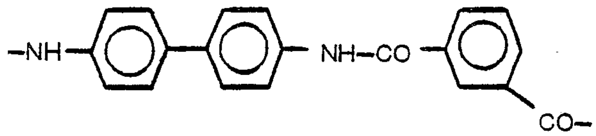 ,

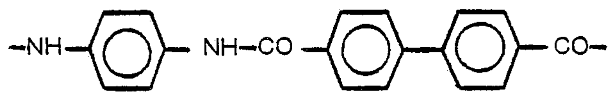 ,

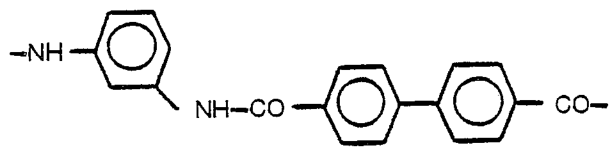 ,

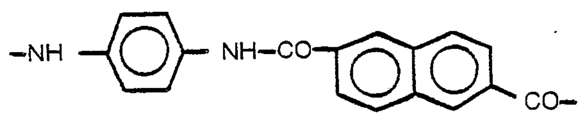 ,

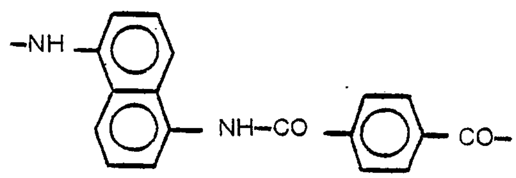 ,

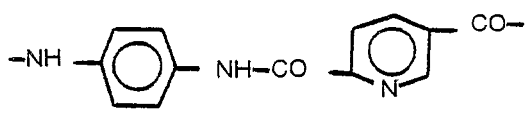 ,

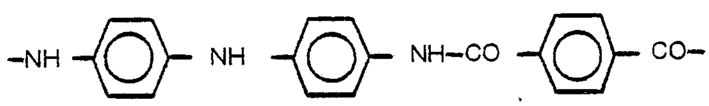 ,

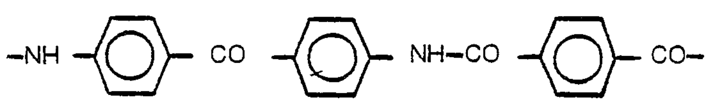 ,

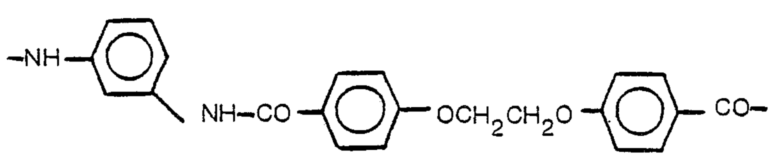 ,

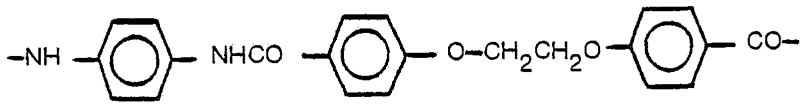,

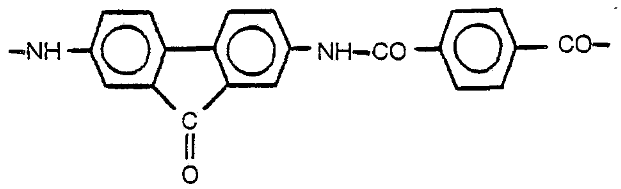,

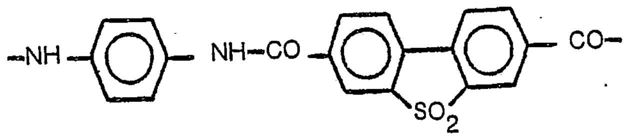.

Examples of the amido unit represented by formula (II) include

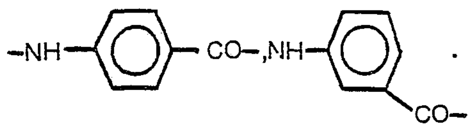.

Examples of the amido unit represented by formula (III) include:

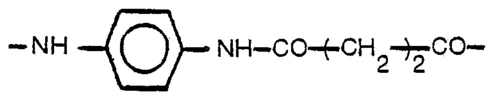,

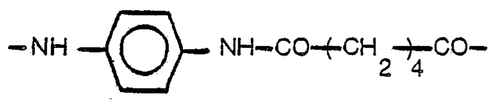,

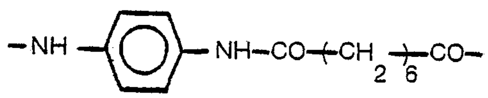,

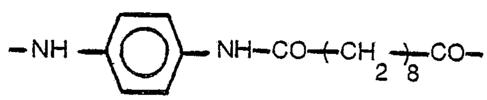,

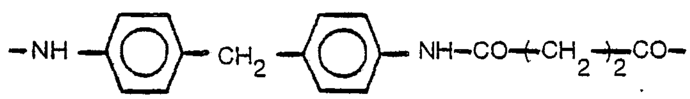,

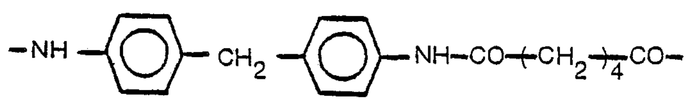,

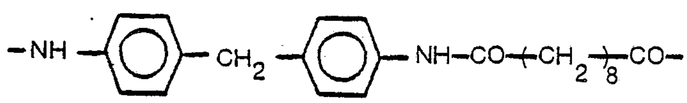,

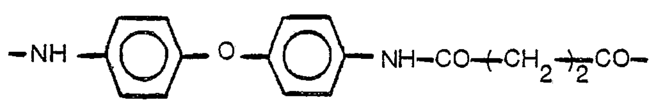,

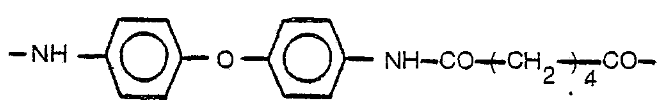,

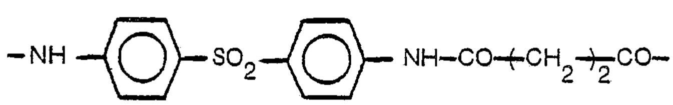,

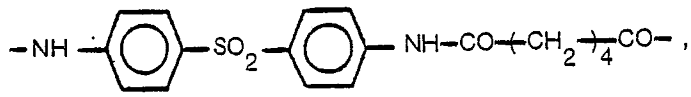

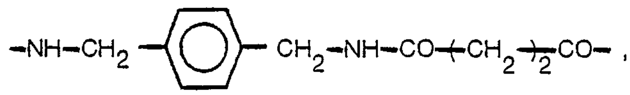

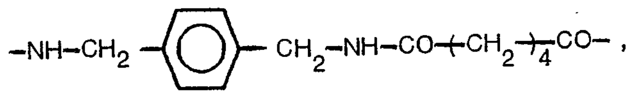

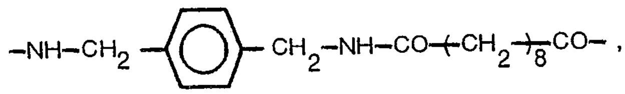

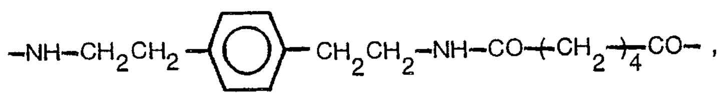

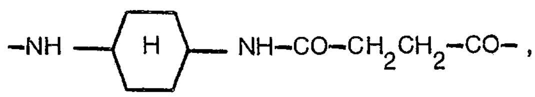

$-NH-CH_2-NH-CO-CH_2CH_2-CO-$ ,

$-NH-CH_2-NH-CO\!\left(CH_2\right)_4CO-$ ,

$-NH-CH_2CH_2-NH-CO\!\left(CH_2\right)_4CO-$ ,

Examples of the amido unit represented by formula (IV) include:

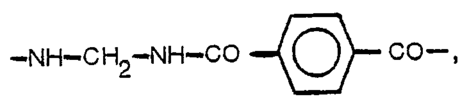

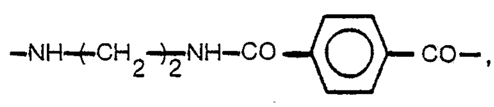

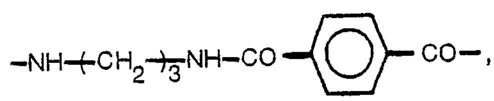

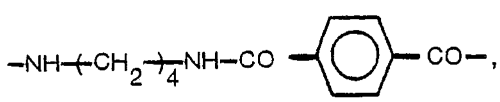

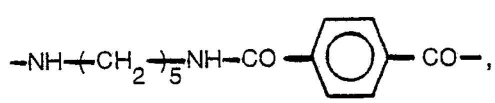

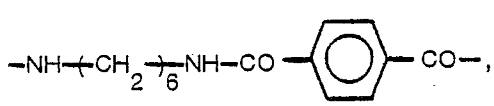

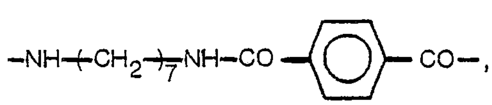

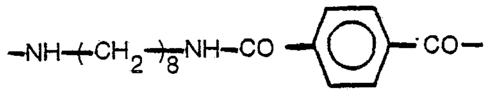 ,

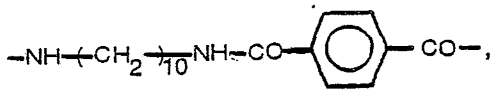 ,

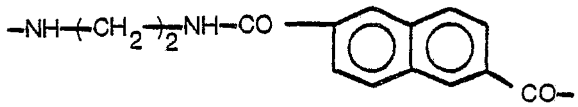

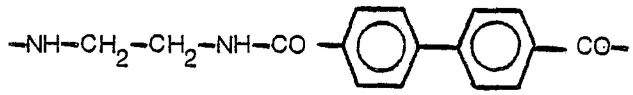

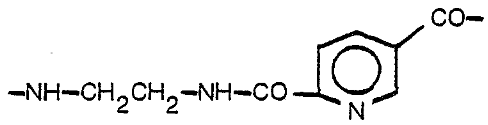

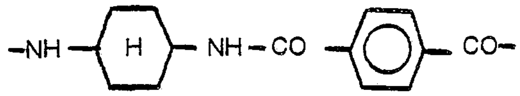

Examples of the amido unit represented by formula (V) include:

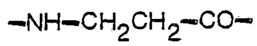 ,

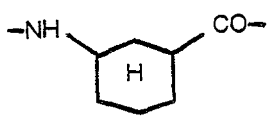 ,

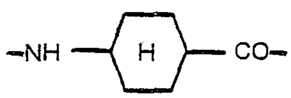 ,

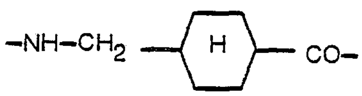 ,

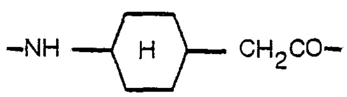 ,

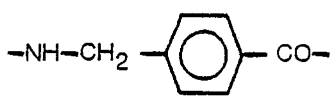 ,

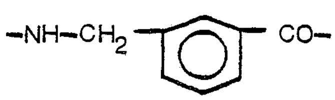 ,

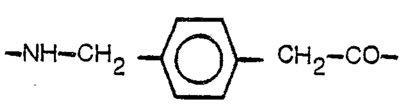 ,

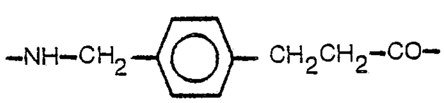 .

Examples of the hydrazido unit represented by formula (VI) include:

$-NH-NH-CO-(CH_2)_2-CO-$ ,

$-NH-NH-CO-(CH_2)_4-CO-$ ,

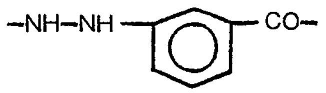 ,

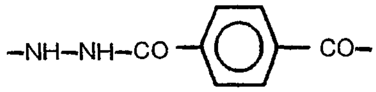 ,

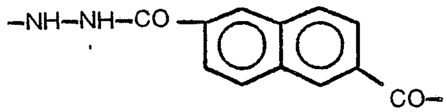 ,

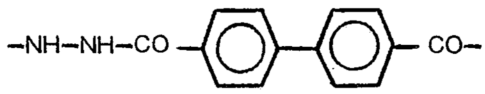 .

Examples of the amido unit represented by formula (VII) include:

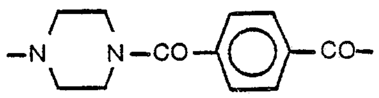 ,

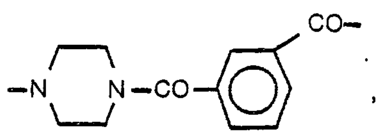 ,

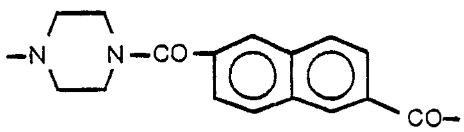 ;

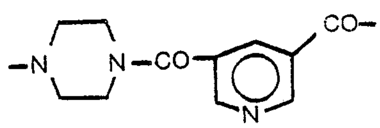 ,

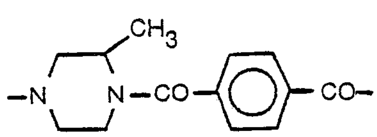 ,

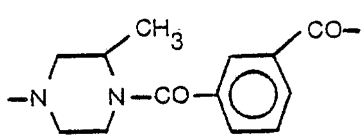 ,

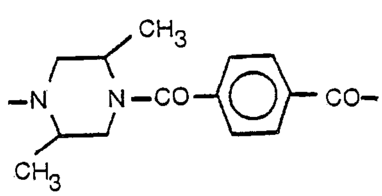 ,

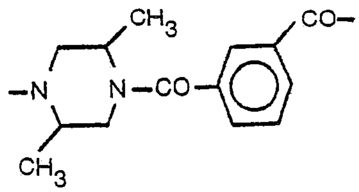 .

Other amido units or hydrazido units may also be used, provided that they do not interfere with the nucleating function of component (B).

These polyamido moieties, polyaminohydrazido moieties, and polyhydrazido moieties, permit reduction in the degree of polymerization thereof while not decreasing the melting point below 270°C, and particularly preferably not below 300°C. The number of the amido units and the hydrazido units are at least 2, and preferably not less than 5, in terms of sum of the number of amido bonds and hydrazido bonds contained therein.

The polyamides of polyhydrazides, component (B), may be blocked at its terminal end with a monofunctional compound or another polymer.

As the above-described monofunctional compound, there are illustrated, for example, amino compounds, phenol compounds, carbonyl halide compounds, carboxylic acid compounds, epoxy compounds, isocyanate compounds and, as the above-described another polymer, various polymers can be used, such as polycondensation polymers or copolymers (e.g., polyesters, polyamides, polyethers, polysiloxanes, polyurethanes, polycarbonates, polysulfones), vinyl polymers (e.g., polystyrene and the copolymers thereof, polyacrylates and the copolymers thereof, polymethacrylates and the copolymers thereof, polyvinyl acetate and the copolymers thereof), and cellulose polymers (e.g., cellulose diacetate, ethyl cellulose).

Formation of bonds between the polyamides or polyhydrazides functioning as nucleating agents and polymers other than these polymers is attained by utilizing the amino group, carboxyl group or chlorocarbonyl group contained in the polyamides or polyhydrazides functioning as nucleating agents or by converting the amino group or amido group thereof to a metal salt ($>N^+M^-$ wherein M represents sodium or potassium), and causing reaction between these groups and reactive groups such as an amino group, a hydroxy group, a carboxyl group, a carboxylic anhydride group, a halogenocarbonyl group, an epoxy group, an isocyanato group, a halogen atom, introduced in the polymers to be bonded with the polyamides or polyhydrazides.

The thus-obtained polyamides or polyhydrazides to be used as component (B) in the present invention contain polyamido moiety, polyamidohydrazide moiety or polyhydrazido moiety functioning as a nucleating agent in a state of being bound blockwise or graftwise to other polymers which serve to prevent more aggregation than is necessary to form too large aggregates due to the strong aggregating force of the polyamido moiety, polyamidohydrazido moiety or polyhydrazido moiety. Thus, component (B) can be suitably dispersed in component (A) of polyester comprising mainly polyethylene terephthalate.

As the other polymer to be bound to the polyamides or polyhydrazides, those which have an excellent kneadability with component (A) are most desirable. Therefore, particularly preferable examples of the other polymers include polyesters, polymethacrylates, polystyrene, cellulose derivatives.

The polyester composition of the present invention can be prepared by dispersing component (B) in component (A) by conventional means so that a half width of an exothermic peak measured in a polyethylene terephthalate-crystallizing temperature range by means of a DSC at a gradual cooling rate of 10°C/min becomes 15°C or less per 8 mg of component A. In the composition, component (B) is used as a nucleating agent for component (A).

The DSC measurement can be conducted in a conventional manner by using a commercially available apparatus of, for example, model DSC II made by Perkin Elmer Co. For example, a sample weighing 8 mg as to component (A) is heated to a temperature higher than the melting point of component (A) in a nitrogenous atmosphere to completely melt the polyester sample comprising mainly polyethylene terephthalate, then cooled at a given rate to record an exothermic peak accompanied by the crystallization. Such differential measurement of polyethylene terephthalate shows that the exothermic peak resulting from crystallization appears in the range of from 180°C to 210°C when cooling is conducted at a rate of 10°C/min. However, this exothermic peak is usually so broad that "the half width of the peak" (that is, the width at a higher one-half the distance from a base line to the top of the peak) is about 20°C as shown in Figure.

When the cooling rate is accelerated, the exothermic peak based on the crystallization will further shift to the low temperature side, with the half width becoming broader and, at a cooling rate of 80°C/min, the exothermic peak generally shifts to from 150°C to 160°C with a half width of more than 30°C.

When the cooling rate is more accelerated, the exothermic peak based on the crystallization will become much broader until substantially no peak is observed.

Polyethylene terephthalate, which shows such a broad half width of exothermic peak based on the crystallization even in the above-described gradual cooling, will be cooled and solidified almost without crystallization in the portions brought into contact with a metal mold surface in molding using an ordinary

metal mold, because the cooling rate of molten polyethylene terephthalate at the metal mold surface is as fast as 300—400°C/min.

In contrast, the composition of the present invention shows an exothermic peak at from 200°C to 220°C based on crystallization in the course of cooling to conduct DSC measurement when cooled at a rate of 10°C/min, that is, it has a crystallizing temperature shifted to the higher temperature side. In addition, the exothermic peak is extremely sharp. The half width of this peak is at least not more than 15°C, preferably not more than 10°C. Compositions showing a half width of 8°C or less have particularly excellent properties.

In cooling at a rate of 80°C/min, the composition of the present invention shows an exothermic peak between 170°C and 210°C based on the crystallization, with a half width of 22°C or less, preferably 20°C or less, and particularly preferably 18°C or less.

Therefore, the composition of the present invention undergoes rapid crystallization even when rapidly cooled in a metal mold, thus providing well crystallized homogeneous moldings having good physical properties.

As is common with ordinary compositions, the composition of the present invention requires individual components constituting the composition to be uniformly dispersed therein. As a method for dispersing component (B) in component (A) in a highly fine-dispersed state, there is, for example, a method of first mechanically crushing, pulverizing or milling the solid polyamide, component (B), having been prepared by various known processes to form a super-fine or microfibril state, then mixing them with a solution of, or molten state, polyester comprising polyethylene terephthalate. In the case of crushing component (B) by mechanical means until it exhibits sufficient effects as a nucleating agent, it is also possible to use a non-solvent for depressing heat generation or for aiding to attain uniform dispersion of component (B), or to crush in the presence of additives (e.g., plasticizers, inorganic fillers, lubricants) or polymers which have been conventionally used for polyethylene terephthalate.

The composition of the present invention can be also prepared by adding, to a solution in a solvent of component (B) prepared by known processes or a component (B) solution or suspension as produced in the production step, a poor solvent therefor to form a finely dispersed precipitate, isolating it by filtration or centrifugation, and mixing them with a solution of component (A) or in molten component (A) or, without isolation, by replacing the solvent by a solvent for polyethylene terephthalate and dissolving therein component (A) followed by causing co-precipitation in a poor solvent for polyethylene terephthalate.

Solvents that can be used in the step for dissolving or producing component (B) include high polar non-reactive solvents, for example, dimethylformamide, dimethylacetamide, tetramethylurea, hexamethylphosphoramide, N-methylpyrrolidone, N-methylcaprolactam, dimethyl sulfoxide, and the mixtures thereof. If necessary, mixtures with other solvents such as nitrobenzene, tetrahydrofuran, dioxane, tetrachloroethane, chloroform, phenol, may also be used. Further, inorganic salts such as calcium chloride or lithium chloride may be added to raise the solubility thereof. As the solvent for dissolving component (B), formic acid, concentrated sulfuric acid or fuming sulfuric acid may also be used.

As the poor solvent, various solvents can be used, such as water, methanol, ethanol, acetone, ethylene glycol, hexane, o-chlorophenol, nitrobenzene, tetrachloroethane, phenol, and the mixtures thereof, with water and methanol being preferable.

In dispersing component (B) in a finely dispersed state using the above-described solvents and poor solvents, desired size and form can be attained by properly selecting the concentration of the solution, combination of said solvent and poor solvent, and mechanical dispersing force upon mixing. Examples of the mechanical dispersing method include a method of using a high-speed stirrer, mixer, or homogenizer, a method of irradiating with ultrasonic waves, and a method of blowing component (B) into a poor solvent in a spray form.

Further, the composition of the present invention can be prepared by mixing the solution or dispersion of component (B), which is mixed with a poor solvent in the aforesaid process, with a dispersing aid, and mixing the resulting mixture with a poor solvent to cause co-precipitation of component (B) and the dispersing aid, or by dissolving in, or mixing with, a poor solvent a dispersing aid and mixing it with a solution or dispersion of component (B) to cause co-precipitation of component (B) and the dispersing aid, followed by mixing or kneading the co-precipitate as produced, or after filtration or washing, with component (A) in a dissolved or molten state.

The dispersing aid serves to prevent unnecessary aggregation to form large aggregates and solidification where only component (B) exists, and serves to facilitate dispersion of component (B) in polyethylene terephthalate in a finely dispersed state.

For the sake of convenience, the dispersing aids which are advantageous in surface property and physical properties of the resulting moldings when incorporated in component (A) are preferable, although those which cause no or only slight adverse effects can be used.

Examples of the dispersing aid include polyethylene terephthalate (and a copolymer thereof, starting material thereof and oligomers thereof), other polymers, plasticizers, surfactants, flame-retardants, antioxidants, stabilizing agents against heat or light, lubricants, reinforcing agents, extenders. Specific examples of the dispersing aid include phosphoric esters (e.g., tricresyl phosphate, tris(2,3-dibromopropyl) phosphate, triphenyl phosphate, tributyl phosphate), esters (e.g., dibutyl phthalate, dimethyl terephthalate, dibutyl terephthalate, dipropyl terephthalate, dimethyl phthalate, di-2-ethylhexyl phthalate, dibutyl adipate, 2-ethylbutyl azelate, dioctyl sebacate, ethylene glycol dibenzoate, neopentyl glycol dibenzoate, triethylene

glycol dibenzoate, butylphthalylbutyl glycolate, butyl p-acetylbenzoate), halides (e.g., chlorinated paraffin, tetrabromobutane, hexabromobenzene, decabromodiphenyl ether, tetrabromobisphenol), phenols (e.g., 2,6-di-tert-butyl-p-cresol, 2,2'-methylene-bis(4-methyl-6-tert-butyl-phenol), tetrakis(methylene-3-(3',5'-di-tert-butyl-4'-hydroxyphenyl)propionato)methane, p-octylphenyl salicylate), benzophenones (e.g., 2-hydroxy-4-methoxybenzophenone, 5-chloro-2-hydroxybenzophenone), metal salts (e.g., sodium laurate, potassium stearate, cadmium stearate, dibutyltin, lead maleate, calcium alkylbenzene-sulfonate), alcohols (e.g., stearyl alcohol, polyoxyethylene nonylphenol ether, polyoxyethylene monocetyl ether, glycerol monostearate), polyesters or the oligomers thereof (e.g., polyethylene terephthalate and the copolymer thereof, bishydroxyethyl terephthalate, polybutylene terephthalate and the copolymer thereof, polyethylene adipate, polyethylene sebacate, polyhexamethylene terephthalate, polycaprolactone), polyamides (e.g., nylon 6, nylon 66, nylon 12), polycarbonates, polysulfones, polysulfides, silicon resins or silicone oil, vinyl polymers and copolymers (e.g., polymethacrylates, polyacrylates, ethylene-vinyl acetate copolymer, polystyrenes), polyoxytetramethylene, polyoxypropylene, polyoxyethylene, polyphosphazens, epoxy resins, cellulose polymers or oligomers (e.g., cellulose acetate, ethyl cellulose, nitrocellulose), and inorganic fibers and inorganic powders (e.g., glass fiber, carbon fiber, potassium titanate fiber, zinc borate, barium metaborate, silica, talc, titanium oxide, antimony oxide). These various materials are properly selected depending upon the purpose. Of these, particularly preferable dispersing aids are polymers (e.g., polyesters and the oligomers thereof, polymethacrylates, polystyrenes, cellulose acetate) and surfactants. The dispersing aid is used in an amount of from 0.5 to 10 parts by weight per part by weight of component (B).

The composition of the present invention can also be prepared by dispersing component (B) having been finely dispersed according to the aforesaid process, in a starting material for component (A) or an intermediate for the final polymer, and subjecting the resulting mixture to the first or intermediate step of polymerization to prepare component (A).

Of the above-described processes to finely disperse component (B) in component (A), preferable results are obtained by the process of using a dispersing aid.

Various other processes are also applicable as long as they enable the attainment of the objects of the present invention. Also, a process of using a composite of component (A) and component (B), obtained by the above-described process, as a master batch, and further blending or kneading it with component (A) to adjust the content of component (B) to a predetermined level is industrially advantageous.

Component (B) is extremely finely dispersed in the thus-obtained composite of components (A) and (B) of the present invention in the form of branched or intertwined microfibrils, complete fine microfibrils, needle-like or particulate state fundamentally having a size (diameter or length) of not more than 50 µm. Compositions providing preferable effects contain component (B) particles ranging from about several µm to about several ten Å in size.

As to blending ratio, component (A) and component (B) of the present invention are to be compounded so that the effect of accelerating crystallization of polyester comprising polyethylene terephthalate is obtained,, or that the half width of exothermic peak based on crystallization by gradual cooling and measured by a DSC at a cooling rate of 10°C/min becomes 15°C or less per 8 mg of said component (A). The weight ratio range of component (B) described above varies depending upon the properties of components (A) and (B) and the dispersed state (e.g., size, shape) of component (B), and hence it is difficult to show the blending ratio of component (A) to component (B) by weight, but, in general, from 0.05 to 10 parts by weight, and preferably from 0.1 to 5 parts by weight, of component (B) is compounded with 100 parts by weight of component (A). In the case of using component (A), e.g., polyethylene terephthalate, as the dispersing aid, component (B) is blended in the above amount based on 100 parts by weight of the total component (A) in the resulting polyester composition.

When component (B) is incorporated in component (A) in a homogeneous, finely dispersed state, the amount of component (B) may be not more than 3 parts by weight, with 0.1 to 3 parts by weight being the most preferable.

The composition of the present invention containing components (A) and (B) as necessary components may further contain various additives such as reinforcing fillers, plasticizers, antioxidants, UV ray-absorbing agents, lubricants, parting agents, flame-retardants, antistatistics, colorants, according to the end-use.

The thus-obtained composition of the present invention is suited as a molding material, showing good molding properties in molding in a low-temperature (not higher than 120°C, preferably around 100°C) metal mold as well as in molding in a high temperature metal mold.

In molding, combined use of the composition of the present invention and a reinforcing filler is extremely effective for improving shape stability, heat resistance, and mechanical characteristics of resulting moldings, with maintaining the original merits of the composition of the present invention, thus being particularly preferable. As such reinforcing filler, there are illustrated fibrous materials such as glass fiber, potassium titanate fiber, asbestos fiber, poly-p-phenyleneterephthalamide fiber, carbon fiber, and non-fibrous inorganic materials such as mica, aluminum silicate, glass beads, glass flake, silica, talc. Of these, glass fiber is particularly preferable. The amount of the reinforcing fiber to be compounded varies depending upon the desired end-use, but, in general, it ranges from 2 to 200 parts by weight, and preferably 4 to 100 parts by weight, per 100 parts by weight of component (A). If the amount is less than 2

parts by weight, sufficient effects of improving form stability or physical properties are not obtained, whereas if it is more than 200 parts by weight, deterioration results, such as in increased fragility and deteriorated molding properties.

In the present invention, combined use of a plasticizer is preferable for improving molding properties and surface lubricity of the resulting moldings (that is, molded articles formed from the polyester composition of the invention). As such plasticizers, appropriate plasticizers may be selected from various known compounds. Examples thereof include phosphates (e.g., triphenyl phosphate, tricresyl phosphate, tricyclohexyl phosphate, triisopropyl phosphate, octyldiphenyl phosphate, triethyl phosphate), phosphites (e.g., triphenyl phosphite, tributyl phosphite, trimethyl phosphite), phosphonates (e.g., phenyl phenylphosphonate, diphenyl phenylphosphate), phosphines (e.g., phenylphosphinic acid, methyl dimethyl-phosphinate, phenyl ethyl phosphinate), benzoic esters (e.g., polyethylene glycol dibenzoate, polypropylene glycol dibenzoate, polytetramethylene glycol dibenzoate, diethylene glycol dibenzoate, triethylene glycol dibenzoate, dipropylene glycol dibenzoate, neopentyl glycol dibenzoate, glyceryl tribenzoate, trimethylolethane tribenzoate, phenyl benzoate, pentaerythritol tetrabenzoate, bishydroxyethyl terephthalate dibenzoate), esters (e.g., dioctyl phthalate, diisodecyl phthalate, diisopropyl isophthalate, di-2-ethylhexyl isophthalate), polyesters (e.g., ethylene adipate/terephthalate copolyester, propylene adipate/terephthalate copolyester) and the oligomers thereof, epoxy compounds obtained from phenols (e.g., hydroquinone, resorcin, pyrogallol, 4,4'-dihydroxydiphenyldimethylmethane, 4,4'-dihydroxydiphenyldimethylsulfone) and epichlorohydrin, epoxy compounds obtained from alcohols (e.g. 1,4-butanediol, 1,6-hexanediol, glycerin, pentaerythritol, diethylene glycol, polyethylene glycol, polytetramethylene glycol) and epichlorohydrin, epoxy compounds obtained from carboxylic acids (e.g., adipic acid, succinic acid, isophthalic acid, terephthalic acid) and epichlorohydrin, polyoxyalkylenes (e.g., polyoxyethylene, polyoxypropylene, polyoxybutylene), benzophenone, 4-fluorobenzophenone, diphenylsulfone, N-ethyl-o,p-toluenesulfonamide, tolylsulfoxide, laurylnitrile, erucylnitrile.

The composition of the present invention contains component (A) and component (B) as necessary components, with component (B) showing a nucleating effect of accelerating crystallization of component (A). Therefore, the composition of the present invention enables the conducting of molding, and particularly injection-molding, at a metal mold temperature of less than 120°C, and particularly at about 100°C, which has been impossible with conventional polyethylene terephthalate, as well as to conduct molding in a high-temperature metal mold. Thus, it has the great significance of expanding the application range of polyethylene terephthalate as an industrially useful resin, in cooperation with its desirable heat resistance and chemical resistance properties.

In addition, the composition can find application as a material for film, fiber, or like molding obtained by extrusion molding or blow molding.

The present invention will now be described in more detail by reference to Examples. Additionally, DSC measurement, molding, and evaluation of sample pieces were conducted as follows.

(1) DSC measurement:

Samples containing 8 mg of component (A) were used: for example, even in the case of compounding glass fiber, samples containing 8 mg as component (A) were weighed out for use. As a resulting apparatus, Model DSC—II manufactured by Perkin Elmer Co. was used. Measurement was conducted in a nitrogenous atmosphere as follows. Samples were heated to 290°C, and, after maintaining at that temperature for 5 minutes, cooled at a definite rate of 10°C/min. Exothermic peak temperature (Tc) and half width ($\Delta T$) of the peak were determined from the exothermic peak obtained based on crystallization of component (A), as shown in the Figure.

(2) Kneading by means of a biaxial screw extruder:

Components (A) and (B) and, if necessary, other additives were blended in given proportions in a rotary drum blender. The resulting blend was pelletized by extruding at from 260°C to 270°C using a 30-mm biaxial screw extruder. The thus-obtained pellets were vacuum-dried at 130°C for 5 hours.

(3) Kneading by means of a uniaxial screw extruder:

Samples with a predominant compounding ratio were blended in a rotary drum blender and pelletized by extruding at 260°C to 270°C using a uniaxial screw extruder. The resulting pellets were vacuum-dried at 130°C for 5 hours.

(4) Molding of sample pieces:

The pellets obtained in (2) or (3) described above were molded using model KC—20 made by Kawaguchi Tekko K.K. under molding conditions of 270°C to 280°C in cylinder temperature, a given temperature in metal mold temperature, and a molding cycle of 25 seconds.

(5) Parting properties and appearance:

Parting properties were evaluated based on the ease with which the molding was taken out of the cavity and with which a sprue was removed. Appearance was evaluated based on the surface gloss and presence or absence of pock marks, as follows:

A: good; B: fairly good; x: unsatisfactory

(6) Measurement of tensile strength:

Dumbbell specimens (dumbbell type-1 of ASTM) were molded according to process (4), and tensile

strength was measured according to ASTM—D—638 using them.

Observation of component (B) in the composition:

A slight amount of the composition obtained in each Example was sandwiched between cover glasses, placed on a hot plate, heated to from 270°C to 300°C to melt, and pressed while in a molten state to reduce the thickness.

(1) When rapidly cooled between cool black bodies, polyethylene terephthalate in the composition was maintained in an amorphous state without crystallization. The thus-obtained samples were observed under a polarizing microscope.

(2) Further, each of the samples was subjected to a heating stage and was observed under the polarizing microscope while heating it.

Results obtained are as follows: In observation (2), component (B) was not melted in every Example, and the size and shape of particles thereof were recognized in both the case of heating the composition from 270°C to 300°C after melting component (A) of polyethylene terephthalate and the case of heating to higher than 300°C (to about 310°C).

Observations were made of the size, shape, and dispersed state of component (B) according to (1) and (2) described above with 100 − 300 × magnification.

Results thus obtained were categorized into the following types:

(a): Strand-like, needle-like, cotton-like or flake-like matter of 2 to 3 μm in width was observed, with extremely fine particulate matter (not larger than 1 μm) existing in a dispersed state;

(b): Particles of indefinite or particulate form were predominant, most of which were as small as 1 μm or less and were dispersed;

(c): Particles of indefinite or particulate form were mostly 1 to 5 μm in size and dispersing apart;

(d): Particles of indefinite or particulate form having a size of about 5 to 10 μm and, in some cases, about 20 to 30 μm, were observed here and there, and particles of 2 or 3 μm or less than 1 μm were dispersed; and

(e): Strand-like matter of about 1 to 3 μm was predominant, and other smaller strand-like, cotton-like or particulate matter were dispersed.

Results of the observations of the compositions in Examples, categorized by the above-described types, are as follows:

Compositions of type (a): Examples 1, 3, 4, 11 and 12
Compositions of type (b): Examples 6—10, 15—17, 60 and 73
Compositions of type (c): Examples 18—35, 39—41, 44, 45—54, 61, 62, 64, 67, 74, 75, 77, and 80—86
Compositions of type (d): Examples 2, 13, 14, 36—38, 42, 43, 55—59, 63, 65, 66, 68—72, 76, 78 and 79
Composition of type (e): Example 5

Reference Example 1

Polyethylene terephthalate having a reduced specific viscosity (ηsp/c) of 0.61 (measured in a tetrachloroethane/phenol (4/6) mixture solvent) was dried to measure the exothermic peak temperature and half width of the peak based on crystallization thereof by DSC measurement. Particularly, when 8 mg of the polyethylene terephthalate was heated at a heating rate of 10°C/min, an endothermic peak of melting point (Tm) was observed at 255°C. Heating was further continued to 290°C and, after maintaining this temperature for 5 minutes, the polymer was cooled at a rate of 10°C/min. The relation between the temperature and calorific value is generally shown by the curve of Figure. Half width of the exothermic peak was determined from the graph as follows. The exothermic peak temperature (Tc) based on crystallization was read 181°C. Width of the peak was measured as the width between two points corresponding to 1/2 of the height of the peak (h). This width was regarded as the half width (ΔT) of the exothermic peak. As a result, ΔT was found to be 19°C.

When the measurement was repeated by changing the cooling rate to 80°C/min, Tc was shifted to 150°C and ΔT expanded to as broad as 36°C.

When this polyethylene terephthalate was molded in metal molds at 100°C, 110°C and 120°C, there resulted extremely poor parting properties (evaluated as x) and rough appearance of the molding (evaluated as x). Moldings with passable parting properties and good appearance (evaluated as A) were obtained only by raising the metal mold temperature to 150°C.

Reference Example 2

A 30 wt% amount of glass fiber (glass chipped strand of 3 mm in length) was kneaded with polyethylene terephthalate (PET) of 0.72 in ηsp/c using a uniaxial extruder. The same test procedures as in Reference Example 1 were conducted to obtain results reported below in Table 1.

Reference Example 3

2 kg of polyethylene terephthalate having an ηsp/c of 0.61, 60 g of talc, and 880 g (30%) of glass fiber were kneaded in a uniaxial screw extruder and molded. The thus-obtained moldings were evaluated to obtain the results reported in Table 1.

Reference Example 4

2 kg of polyethylene terephthalate having an ηsp/c of 0.72, 40 g of talc, and 880 g (30%) of glass fiber were kneaded in a uniaxial screw kneader and molded. The thus-obtained moldings were evaluated to obtain the results reported in Table 1.

TABLE 1

| Reference Example No. | PET ηsp/c | Metal Mold Temp. | DSC Tc | DSC ΔT | Parting Properties | Appearance | Tensile Strength |
|---|---|---|---|---|---|---|---|
| | | (°C) | | | | | ($kg/cm^2$) |
| 2 | 0.72 | 100 | 185 | 23 | x | x | — |
| | | 110 | | | x | x | — |
| | | 120 | | | x | x | — |
| | | 150 | | | A | A | 1,360 |
| 3 | 0.61 | 100 | 201 | 16 | x | x | — |
| | | 110 | | | x | x | — |
| | | 120 | | | x | x | — |
| | | 150 | | | A | A | 1,060 |
| 4 | 0.72 | 100 | 198 | 17 | x | x | — |
| | | 110 | | | x | x | — |
| | | 120 | | | x | x | — |
| | | 150 | | | A | A | 1,350 |

Example 1

(1) A 1-liter reactor equipped with a high-speed stirrer was well dried by introducing hot dry nitrogen gas thereinto, and then cooled. 100 ml of dry, purified hexamethylphosphoramide, 150 ml of N-methyl-2-pyrrolidone, and 8 g of anhydrous lithium chloride were charged therein, and 2.25 g of p-phenylenediamine was added thereto and completely dissolved therein. Then, this solution was cooled to 5°C to 10°C, and, under vigorous stirring, 4.27 g of terephthalic acid dichloride was added thereto. After reacting for about 1 hour, the temperature of the solution was raised to 30°C to 40°C, reaction being continued for another 1 hour.

A part of the thus-produced poly-p-phenylene-terephthalamide was removed from the reaction system, precipitated in water, repeatedly washed with warm water, and dried for measuring viscosity. As a result, relative viscosity (ηrel) measured at 35°C as a 0.2 g/100 ml solution in 97% concentrated sulfuric acid was found to be 1.90, and the mean polymerization degree about 80.

(2) 25 g of bishydroxyethyl terephthalate (i.e., polyethylene terephthalate oligomer) was dissolved as a dispersing aid under heating in the above-described reaction mixture, and the resulting mixture was poured into about 3 liter of water under vigorous stirring, and the solid thus-formed was filtrated out, washed with water, dried, and well comminuted. The amount of 28 g of resulting solid contained 16.5% poly-p-phenyleneterephthalamide component insoluble in nitrobenzene. 25 g of this solid was well mixed with 400 g of polyethylene terephthalate used in Reference Example 1, and sufficiently kneaded in a molten state. The thus-obtained kneaded material contained about 0.96% poly-p-phenyleneterephthalamide insoluble in o-chlorophenol. This composition had a Tc of 221°C measured by DSC at a cooling rate of 10°C/min. The exothermic peak in this temperature range was as sharp as 5.7°C in ΔT. Also, DSC measurement of the product at a cooling rate of 80°C/min gave a Tc of 196°C and ΔT of 14.5°C. When the product was molded in a 110°C metal mold, there were obtained moldings with good parting properties and good appearance (both evaluated as A).

(3) The same procedures as described above were repeated on a 5-fold scale except for using polyethylene terephthalate of 0.82 in ηsp/c and kneading by means of a biaxial screw extruder. Then, the kneaded product was kneaded with a 30 wt% amount of glass fiber in a uniaxial screw extruder. When the thus-kneaded product was molded in a 110°C metal mold, the results reported in Table 2 were obtained.

Example 2

(1) 150 ml of N-methylpyrrolidone, 100 ml of N,N-dimethylacetamide, and 2.15 g of p-phenylenediamine were charged in the reactor used in Example 1-(1) and, after dissolving the mixture, 4.44 g of terephthalic acid dichloride was added thereto at 5°C—10°C under vigorous stirring followed by reacting for 2 hours.

A part of this reaction product was removed and subjected to viscosity measurement in the same manner as in Example 1-(1). As a result, relative viscosity (ηrel) was found to be 0.90, and mean polymerization degree about 10.

To the remaining reaction mixture was added, under heating and vigorous stirring, a solution of 50 g of neopentyl glycol dibenzoate in N,N-dimethylacetamide. Then, this mixture was mixed with a solution of 25 g of polyethylene terephthalate in o-chlorophenol under vigorous stirring followed by pouring thereinto about 2 liter of methanol. The precipitate thus-formed was collected by filtration, washed with methanol, dried under reduced pressure, and well sprinkled on 325 g of polyethylene terephthalate used in Reference Example 1 followed by well kneading. The thus-obtained composition contained about 1.3% o-chlorophenol-insoluble poly-p-phenyleneterephthalamide. DSC measurement revealed that Tc and ΔT of this composition measured at a cooling rate of 10°C/min were 212°C and 5.4°C, respectively, and Tc and ΔT measured at a cooling rate of 80°C/min were 192°C and 13.4°C, respectively. When the composition was molded in a 110°C metal mold, moldings with good parting properties and good appearance (both evaluated as A) were obtained.

(2) The same procedures as described above were conducted on a 10-fold scale, except for using polyethylene terephthalate of 0.72 in ηsp/c, and kneading by means of a biaxial screw extruder. Then, 70 parts of the kneaded product were kneaded with 30 parts of glass fiber in a uniaxial screw extruder. The thus-obtained resin was molded and the results reported in Table 2 were obtained.

Example 3

(1) Reaction was conducted in the same manner as in Example 1-(1), except for using a mixture consisting of 80 mol% of p-phenylenediamine and 20 mol% of 4,4′-diaminodiphenyl instead of p-phenylenediamine. After adding to the reaction mixture 100 ml of hexamethylphosphoramide and 150 ml of N-methylpyrrolidone under heating, the resulting mixture was mixed with a solution of 40 g of polyethylene terephthalate in about 800 ml of o-chlorophenol under vigorous stirring. The resulting mixture was poured into a large amount of methanol, comminuted in a mixer, collected by filtration, and washed with methanol. After drying, the product was well mixed and kneaded with 660 g of polyethylene terephthalate used in Reference Example 1. This composition contained about 0.7% aromatic polyamide component. DSC measurement revealed that Tc and ΔT of this composition measured at a cooling rate of 10°C/min were 219°C and 5.8°C, respectively, and that Tc and ΔT measured at a cooling rate of 80°C/min were 188°C and 12.9°C, respectively. When the composition was molded in a 110°C metal mold, moldings with good parting properties and good appearance (both evaluated as A) were obtained.

(2) The same procedures as in (1) were conducted on a 4-fold scale, except for using polyethylene terephthalate of 0.72 in ηsp/c and kneading by means of a biaxial screw extruder. Then, 65 parts of this kneaded product was kneaded with 35 parts of glass fiber in a uniaxial screw extruder. The thus-obtained resin was molded and the results reported in Table 2 were obtained.

TABLE 2

| Example | DSC Tc | DSC ΔT | Metal Mold Temperature | Parting Properties | Appearance of Moldings | Tensile Strength |
|---|---|---|---|---|---|---|
| | (°C) | (°C) | (°C) | | | ($kg/cm^2$) |
| 2-(2) | 210 | 5.9 | 110 | A | A | 1,550 |
| 3-(2) | 212 | 6.2 | 110 | A | A | 1,580 |
| 1-(3) | 218 | 5.8 | 110 | A | A | 1,420 |

Example 4

(1) 14 g of commercially available poly-p-phenyleneterephthalate fiber (trade name: Kevlar®) was dissolved in 200 ml of 99.8% concentrated sulfuric acid. After dissolving therein 20 g of dodecylbenzenesulfonic acid and 20 g of polyoxyethylene nonylphenol as co-precipitating agents, the resulting mixture was poured into a large amount of water under vigorous stirring. The precipitate thus-formed was collected by filtration, washed with water, and dispersed in methanol followed by replacing the solvent by nitrobenzene. After dissolving therein 50 g of polyethylene terephthalate, the mixture was again poured into a large amount of methanol to co-precipitate. The precipitate thus-formed was washed with

methanol, dried, and well mixed and kneaded with 650 g of polyethylene terephthalate used in Reference Example 1. The thus-kneaded composition contained about 1.9% aromatic polyamide component. DSC measurement revealed that Tc and ΔT of this composition measured at a cooling rate of 10°C/min were 217°C and 5.5°C, respectively, and that Tc and ΔT at a cooling rate of 80°C/min were 185°C and 14.2°C, respectively.

(2) When the resin obtained in (1) was molded in a 120°C metal mold, moldings with good parting properties and good appearance (evaluated as A) were obtained.

Example 5

Poly-p-phenyleneterephthalamide was spun from a concentrated sulfuric acid solution according to a known process. The resulting filaments (6 to 8 μm in diameter) were cut into 0.1 to 0.15-mm long pieces, beaten in an iron mortar, mixed with an about 3-fold amount of glass fiber, crushed in a finely crushing hammer mill, and milled for 5 days and 5 nights in a ball mill in the presence of N-methylpyrrolidone. The thus-milled product was dispersed in chlorophenol, and 50 g of polyethylene terephthalate used in Reference Example 1 was dissolved therein followed by co-precipitation in methanol. The composition obtained by washing with methanol and drying contained about 2.8% aromatic polyamide component (about 11.2% as o-chlorophenol insolubles). DSC measurement revealed that Tc and ΔT of this composition measured at a cooling rate of 10°C/min were 215°C and 5.9°C, respectively, and that Tc and ΔT at a cooling rate of 80°C/min were 185°C and 14.5°C, respectively.

Example 6

19.83 g of 4,4′-diaminodiphenylmethane was reacted with 20.81 g of terephthalic acid dichloride in the same manner as in Example 2-(1) using 1 liter of hexamethylphosphoramide, 1.5 liter of N-methylpyrrolidone (solvent), and 75 g of lithium chloride. To the reaction mixture were added as dispersing aids 20 g of polystyrene and 50 g of polyethylene terephthalate/adipate (molar ratio of terephthalic acid to adipic acid = 55/45) to dissolve. This solution was poured into a large amount of water, and the precipitate thus-formed was collected by filtration, washed, dried, and kneaded with 2.5 kg of polyethylene terephthalate (ηsp/c = 0.75) and 50 g of neopentyl glycol dibenzoate in a biaxial screw extruder. The thus-kneaded product is then kneaded with 1 kg of glass fiber in a uniaxial screw extruder, and the resulting resin was molded in a 110°C metal mold. Results thus-obtained are shown in Table 3.

Examples 7—10

The same procedures as in Example 6 were conducted except for changing the diamine component, dicarboxylic acid component, and dispersing aid. Results thus-obtained are tabulated in Table 3.

TABLE 3

| Example | Diamine Component | Dicarboxylic Acid Component | Dispersing Aid (molar ratio) | DSC Tc (°C) | DSC ΔT (°C) | 1* | 2* | Tensile Strength ($kg/cm^2$) |
|---|---|---|---|---|---|---|---|---|
| 6 | 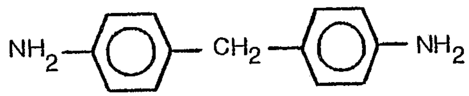 19.83 g | 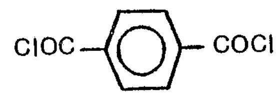 20.81 g | Polystyrene 20 g<br>Polyethylene terephthalate/ adipate (55/45) 50 g | 213 | 5.9 | A | A | 1,590 |
| 7 | 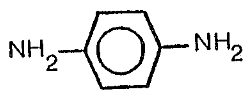 10.61 g | 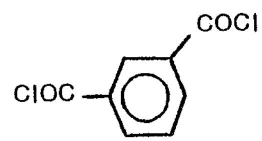 20.81 g | Polyethylene terephthalate/ sebacate (60/40) 70 g | 209 | 6.7 | A | A | 1,610 |
| 8 | 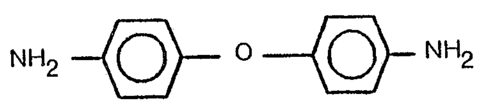 20.02 g | 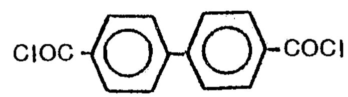 8.37 g<br>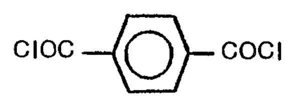 20.30 g | Polyethylene/ butylene terephthalate 30 g (EG/BD=60/40 in molar ratio)<br>Polymethyl methacrylate 30 g | 212 | 5.9 | A | A | 1,560 |

TABLE 3 (Continued)

| Example | Diamine Component | | Dicarboxylic Acid Component | | Dispersing Aid (molar ratio) | DSC Tc (°C) | DSC ΔT (°C) | 1* | 2* | Tensile Strength (kg/cm²) |
|---|---|---|---|---|---|---|---|---|---|---|
| 9 | 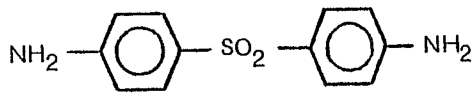 | 24.83 g | 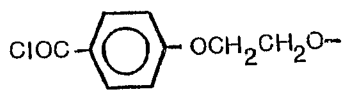 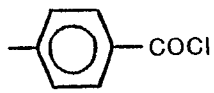 | 34.93 g | Polyethylene terephthalate/ polytetra-methylene glycol copolymer (PTMG 50%) 30 g | 208 | 6.2 | A | A | 1,570 |
| | | | | | Cellulose diacetate 20 g | | | | | |
| 10 | 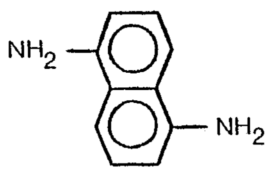 | 15.82 g | 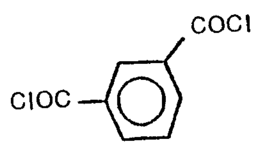 | 20.81 g | Polyethylene terephthalate/ adipate (60/40) | 207 | 6.8 | A | A | 1,620 |

*1 Parting properties

*2 Appearance of moldings

EG, BD, and PTMG represent ethylene glycol component, 1,4-butanediol component, and polytetramethylene glycol component, respectively.

Example 11

(1) A 1-liter reactor equipped with a stirrer, nitrogen gas inlet, and condenser was well dried by introducing hot dry nitrogen gas thereinto, and then cooled. 400 ml of dry, purified N-methylpyrrolidone, 110 ml of pyridine, 20 g of lithium chloride, 12 ml of triphenyl phosphite, and 28 g of p-aminobenzoic acid were charged therein, dissolved at room temperature, and heated to 80°C to cause polymerization. The reaction was conducted four times changing the reaction time. After completion of the reaction, the reaction solution was removed, partly or wholly (as indicated in Run Nos. 1—4 below), of the reactor and mixed with water to precipitate produced aromatic polyamide. The precipitate thus-formed was purified, dried, and dissolved in 98% sulfuric acid to measure the viscosity at 30°C in a concentration of 0.5 g/dl. The results thus-obtained are shown below.

| Run No. | Reaction Time (hr) | Relative Viscosity at 30°C |
|---|---|---|
| 1 | 1.5 | 1.14 |
| 2 | 2.5 | 1.45 |
| 3 | 3.5 | 1.69 |
| 4 | 4.5 | 2.30 |

(2) A solution prepared by diluting about 70 ml of the aromatic polyamide reaction solution (Run No. 4) synthesized in (1) above with 100 ml of N-methylpyrrolidone, was mixed with a solution of 310 g of polyethylene terephthalate used in Reference Example 1 in 5 liters of o-chlorophenol under vigorous stirring. This mixture was then added to a large amount of excess methanol followed by stirring. The precipitate thus-obtained were repeatedly washed with methanol, then with water, and dried. A part of this composition was redissolved in o-chlorophenol, and insolubles were separated, dried, and weighed. IR absorption spectrum and elemental analysis revealed that the insolubles were polybenzamide, which were contained in a proportion of 0.98%. DSC measurement revealed that Tc of this composition measured at a cooling rate of 10°C/min was 215°C, and revealed a sharp exothermic peak having a ΔT value of 6.0.

Example 12

About 100 ml of the reaction solution of polybenzamide obtained in Run No. 3 of Example 11 was diluted with 100 ml of N-methylpyrrolidone, and about 20 g of bishydroxyethyl terephthalate (polyethylene terephthalate oligomer) was dissolved therein by heating. Then, this solution was mixed with 500 ml of a nitrobenzene solution containing 20 g of polyethylene terephthalate, and mixed with a large amount of methanol to form a precipitate. The precipitate thus-formed was washed with successive, methanol and water, and mixed with polyethylene terephthalate oligomer followed by condensation reaction to obtain a highly polymerized polyethylene terephthalate composition. Polyethylene terephthalate in this composition had a viscosity ($\eta sp/c$) of 0.66. When polyethylene terephthalate in the composition was dissolved in o-chlorophenol to isolate insolubles, the insolubles were identified as polybenzamide, which were contained in an amount of 1.75%. DSC measurement revealed that Tc and ΔT of this composition measured at a cooling rate of 10°C/min were 216°C and 7.4°C, respectively.

Example 13

3 g of polybenzamide obtained in Run No. 2 of Example 11 was dissolved in 200 ml of 99% concentrated sulfuric acid, and 20 ml of polyoxyethylene p-nonylphenol ether was added thereto and dissolved therein. This mixture was added to cold water under vigorous stirring to form a precipitate. The thus-obtained precipitate was washed with water, repeatedly washed with methanol, washed with ethylene glycol, and formed into a slurry in ethylene glycol. This slurry was mixed with bishydroxyethyl terephthalate (polyethylene terephthalate oligomer) followed by conducting polymerization. Thus, there was obtained 60 g of a polymer mixture, most of which was o-chlorophenol-soluble polyethylene terephthalate, with the content of o-chlorophenol insolubles (polybenzamide) being about 4.7%. Then, 210 g of polyethylene terephthalate used in Reference Example 1 was blended in a molten state with 50 g of the above-described polybenzamide-containing polyethylene terephthalate. The content of polybenzamide (o-chlorophenol insolubles) in the thus-obtained polyethylene terephthalate composition was 0.9%. DSC measurement of this composition revealed that Tc and ΔT measured at a cooling rate of 10°C/min were 211°C and 6.2°C, respectively.

Example 14

5 g of polybenzamide prepared in Run No. 1 of Example 11 was dissolved in a mixture solvent of 150 ml of dimethylacetamide, 250 ml of hexamethylphosphoramide, and 20 g of lithium chloride and, further, 10 g of ethylene/vinyl acetate copolymer, 10 g of ethylene glycol dibenzoate, and 5 g of bisphenol type epoxy

resin. Then, this mixture solution was mixed with 400 ml of an o-chlorophenol/m-cresol mixture (weight ratio = 1/1), and the resulting solution was vigorously mixed with a methanol/water mixture solution (weight ratio = about 3/1) to form a precipitate. The thus-obtained precipitate was washed with successive, methanol and water, then dried. The dried precipitate was kneaded with 460 g of polyethylene terephthalate used in Reference Example 1. The resulting composition contained about 1.0% polybenzamide (insoluble in o-chlorophenol and ethyl acetate). DSC measurement of this composition revealed that Tc and ΔT measured at a cooling rate of 10°C/min were 214°C and 5.9°C, respectively. When this composition was molded in a 110°C metal mold, there were obtained moldings with good parting properties and good appearance (both evaluated as A).

Example 15

400 ml of dimethylacetamide was charged in the same reactor as used in Example 11, and a mixture of 32 g of p-aminobenzoyl chloride hydrochloride and 8 g of m-aminobenzoyl chloride hydrochloride was added thereto. The reaction was conducted at 0°C for about 2 hours. After completion of the reaction, water was added thereto to form a precipitate. The precipitate was isolated, washed with water, and dried. The thus-obtained aromatic polyamide had a logarithmic viscosity of 0.18 measured in a 98% sulfuric acid solution. 4 g of this aromatic polyamide was dissolved in a mixture of 400 ml of hexamethylphosphoramide, 50 ml of dimethyl sulfoxide, and 10 g of calcium chloride. The resulting mixture was mixed with a nitrobenzene solution of 20 g of polyethylene terephthalate used in Reference Example 1, then with methanol. The resulting precipitate was washed, dried, and kneaded with 500 g of polyethylene terephthalate used in Reference Example 1. The thus-obtained composition contained 0.76% the aromatic polyamide. DSC measurement of this composition revealed that Tc and ΔT measured at a cooling rate of 10°C/min were 210°C and 7.2°C, respectively. When this composition was molded in a 120°C metal mold, moldings with good parting properties and good appearance (both evaluated as A) were obtained.

Example 16

15 g of the polybenzamide obtained in Run No. 2 of Example 11 was dissolved in 2.5 liters of N-methylpyrrolidone, and 75 g of polyethylene terephthalate/adipate (molar ratio of terephthalic acid to adipic acid = 55/45) was added thereto and dissolved therein as a dispersing aid. The resulting solution was poured into a large amount of water. The precipitate thus-formed was washed, dried, and kneaded with 1.3 kg of polyethylene terephthalate ($\eta sp/c$ = 0.72) in a biaxial screw kneader. Furthermore, the thus-kneaded product was kneaded with 590 g of glass fiber in a uniaxial screw extruder. The thus-obtained resin was molded in a 110°C metal mold. The results obtained are reported in Table 4 below.

Example 17

18 g of the aromatic polyamide synthesized in the same manner as in Example 15 was dissolved in 2.5 liters of dimethylacetamide, and 20 g of polystyrene and 50 g of polyethylene terephthalate/sebacate (molar ratio of terephthalic acid to sebacic acid = 60/40) were added thereto and dissolved therein as dispersing aids. The resulting solution was poured into a large amount of water. The precipitate thus-formed was washed, dried, and subjected to the same procedures as in Example 16. The results obtained are reported in Table 4 below.

TABLE 4

| Example | Tc | ΔT | Metal Mold Temperature | Parting Properties | Appearance of Molding | Tensile Strength |
|---|---|---|---|---|---|---|
| | (°C) | (°C) | (°C) | | | (kg/cm$^2$) |
| 16 | 209 | 6.5 | 110 | A | A | 1,530 |
| 17 | 209 | 7.1 | 120 | A | A | 1,560 |

Example 18

(1) A 1-liter reactor equipped with a high-speed stirrer was well dried by introducing hot dry nitrogen gas thereinto, and then cooled. 100 ml of dry, purified hexamethylphosphoramide, 150 ml of N-methyl-2-pyrrolidone, and 8 g of anhydrous lithium chloride were charged therein, and 2.25 g of p-phenylenediamine was added thereto and completely dissolved therein.

Then, this solution was cooled to 5—10°C and, under vigorous stirring, 4.27 g of terephthalic acid dichloride was added thereto. After reacting for about one hour, the temperature of the solution was raised to 30—40°C, reaction being continued for another one hour.

A part of the thus produced poly-p-phenyleneterephthalamide was removed from the reaction system, precipitated in water, repeatedly washed with warm water, and dried for measuring viscosity. As a result,

relative viscosity (η rel) measured at 35°C as a 0.2 g/100 ml solution in 97% conc. sulfuric acid was found to be 1.90, and mean polymerization degree about 80.

Then, 6.47 g of ethylene glycol and 4.2 g of a sodium hydride dispersion were added to the above-described reaction mixture and, after stirring for one hour, 21.1 g of terephthalic acid dichloride was added thereto, reaction being continued for 4 hours under vigorous stirring. Then, this reaction mixture was poured into a large amount of methanol to precipitate the product followed by filtration. The filtration was repeatedly washed with hot ethanol, then successively with, warm water and acetone, and dried. Thus, there was obtained 22.1 g of a product containing about 23% (determined based on elemental analysis) poly-p-phenyleneterephthalamido component.

(2) o-chlorophenol was added to 10 g of the thus obtained product and heated to dissolve soluble substances followed by filtration. The o-chlorophenol insolubles were further washed with o-chlorophenol, repeatedly washed with ethanol, and dried to obtain 3.4 g of a solid substance. Elemental analysis of this substance revealed that it was a block copolymer comprising 50 repeating units of polyethylene terephthalate per 80 repeating units of poly-p-phenyleneterephthalamide. Additionally, aforesaid o-chlorophenol solubles were all polyethylene terephthalate.

(3) 0.075 g of the o-chlorophenol-insoluble block copolymer obtained in (2) was added to a solution of 3 g of lithium chloride in 100 ml of hexamethylphosphoramide and dissolved therein by heating. The resulting solution was poured into a nitrobenzene solution containing 5 g polyethylene terephthalate used in Reference Example 1 and vigorously stirred. Then, the mixture was cooled, and a large amount of methanol was added thereto to isolate the polymer by precipitation.

Then, the polymer precipitate was collected by filtration, repeatedly washed with methanol, and dried to obtain a mixture of polyethylene terephthalate and block copolymer. This mixture contained about 1 wt % poly-p-phenyleneterephthalamido block component. DSC measurement of the thus obtained blend revealed that the temperature corresponding to exothermic peak based on crystallization of polyethylene terephthalate, Tc, was 215°C, and the half width of the peak (ΔT) was 5.3°C.

Example 19

1.1 g of the reaction product (corresponding to about 0.37 g of o-chlorophenol-insoluble block copolymer) obtained in the same manner as in Example 18-(1) was kneaded with 50 g of polyethylene terephthalate used in Reference Example 1 in a nitrogenous atmosphere at 260—280°C using a small-sized kneading tester, taken out, and cooled. DSC measurement of this blend in the same manner as in Reference Example 1 revealed that the temperature of the exothermic peak based on the crystallization was 213°C, and that the peak had a half width of 5.5°C. Additionally, the content of poly-p-phenyleneterephthalamido block component based on polyethylene terephthalate was about 0.5 wt %.

Example 20

2.2 g of the reaction product obtained in the same manner as in Example 18-(1) was kneaded with 50 g of the same polyethylene terephthalate as used in Reference Example 1 and 10 g of glass fiber as in Example 19. DSC measurement of the thus obtained blend revealed that the temperature for the exothermic peak based on the crystallization was 215°C and the half width of the peak 5.3°C. Additionally, the content of poly-p-phenyleneterephthalamido component based on polyethylene terephthalate was about 1 wt%.

Example 21

(1) 150 ml of N-methylpyrrolidone, 100 ml of N,N-dimethylacetamide, and 2.15 g of p-phenylenediamine were charged in the same reactor as used in Example 18-(1) and, after dissolving, 4.44 g of terephthalic acid dichloride was added thereto at 5—10°C under vigorous stirring followed by reacting for 2 hours. When a slight amount of the reaction product was taken out to measure viscosity as in Example 18, relative viscosity (η rel) was determined to be 0.90, and mean polymerization degree about 10.

(2) To the reaction mixture obtained in (1) were added 23 g of polyethylene terephthalate oligomer of about 10 in mean polymerization degree having hydroxyl groups at both terminal ends (bishydroxyethyl terephthalate lower polymer) and 150 ml of N,N-dimethylacetamide. After further adding thereto 1 g of a sodium hydride dispersion, the reaction system was raised to 80—100°C to react for 2 hours. After completion of the reaction, the cooled reaction mixture was poured into a large amount of methanol, and the precipitate thus formed was washed with successive, methanol, ethanol, water, and acetone, and dried to obtain 24.3 g of a block copolymer. Elemental analysis of this copolymer revealed that it contained about 19% poly-p-phenyleneterephthalamido block component.

(3) 4 g and 8 g portions of the block copolymer obtained in (2) were respectively mixed in a molten state with 50 g of polyethylene terephthalate to prepare two compositions.

These compositions respectively contained about 1.5% and about 3% of poly-p-phenyleneterephthalamido block component. DSC measurement thereof revealed that the temperatures for the exothermic peak based on the crystallization were 210°C and 208°C, respectively, with the half widths of the peaks being 5.7°C and 6.5°C, respectively.

Example 22

(1) 10 mg of antimony oxide and 20 mg of triphenyl phosphite were added to 10 g of the reaction product obtained in Example 21-(2), and the resulting mixture was heated in vacuo up to 280°C to conduct polymerization. o-chlorophenol solubles of the thus obtained polymer had a reduced specific viscosity of 0.58. Elemental analysis of the polymer revealed that the content of poly-p-phenyleneterephthalamido block component in the polymer was about 19.5%.

(2) 2 g of this polymer was kneaded in a molten state with 50 g of polyethylene terephthalate. DSC measurement of this composition revealed that the temperature for the exothermic peak based on the crystallization was 212°C, and that the half width of the peak was 5.9°C.

Example 23

(1) Reaction was conducted in the same manner as in Example 18-(1) using a mixture composed of 80 mol % of p-phenylenediamine and 20 mol % of 4,4'-diaminodiphenyl in place of p-phenylenediamine used in Example 18-(1). Thus, there was obtained 22.3 g of a product containing about 23% aromatic polyamido block component.

(2) DSC measurement of a kneaded blend of 2 g of the product and 50 g of polyethylene terephthalate revealed that the temperature for the exothermic peak based on the crystallization was 216°C, and that half width of the peak at this temperature was 5.7°C.

Example 24

The same procedures as in Example 18-(1) were repeated on a 10-fold scale. The resulting product contained 24% poly-p-phenyleneterephthalamido component. 70 g of this product was kneaded with 1.5 kg of polyethylene terephthalate ($\eta$ sp/c = 0.82) in a biaxial screw extruder, and the thus kneaded blend was kneaded with a 30% amount of glass fiber in a uniaxial screw extruder. The thus obtained resin was molded in a metal mold of a particular temperature as shown in Table 5 below.

Additionally, when the blend kneaded in the biaxial screw extruder was directly molded in a 120°C or 110°C metal mold, moldings were obtained with good parting properties and good appearance (both evaluated as A). (See table 5).

Example 25

The same procedures as described in Example 21-(1) and -(2) were repeated on a 5-fold scale except for additionally using 500 g of nitrobenzene as a solvent for bishydroxyethyl terephthalate oligomer. The resulting product contained about 20% p-phenyleneterephthalamido component. 100 g of this product, 1.5 kg of polyethylene terephthalate ($\eta$ sp/c = 0.82), and 680 g of glass fiber were kneaded in a uniaxial screw extruder, and the thus obtained resin was evaluated. Results thereof are given in Table 5.

Example 26

The same experiment as described in Example 22-(1) was repeated on a 20-fold scale. The resulting product contained 22% poly-p-phenyleneterephthalamido component. This is kneaded with polyethylene terephthalate ($\eta$ sp/c = 0.72) in a biaxial screw extruder, then compounded with 30% glass fiber followed by kneading in a uniaxial screw extruder. Results obtained by molding the thus obtained resin are shown in Table 5. Additionally, when the blend kneaded in the biaxial screw extruder was directly molded in a 110°C metal mold, moldings were obtained with good parting properties and good appearance (both evaluated as A).

Example 27

The same experiment as described in Example 23-(1) was repeated on a 10-fold scale. 100 g of the resulting product (containing about 23% aromatic polyamido block component), 1.5 kg of polyethylene terephthalate ($\eta$ sp/c = 0.78), and glass fiber were kneaded and molded in the same manner as in Example 24. Results thus obtained are shown in Table 5.

Example 28

10.81 g of m-phenylenediamine (as a diamine component) was reacted with 21.11 g of terephthalic acid dichloride (as a dicarboxylic acid component) in the same manner as in Example 18-(1), using a solution of 1 liter of hexamethylphosphoramide, 1.5 liters of N-methylpyrrolidone, and 75 g of lithium chloride as a solvent. Then, 100 g of polyethylene terephthalate/sebacate (molar ratio of terephthalic acid to sebacic acid = 70/30; $\eta$ sp/c = 0.38) was added to the solution as a copolymerizable polyester, and 20 g of a sodium hydride dispersion was further added thereto to conduct reaction for one day. Then, 200 ml of methanol was added thereto, and the resulting mixture was poured into a large amount of water. The precipitate thus formed was separated, washed, and dried. This product contained about 24% aromatic polyamido component. This was kneaded with 1.5 kg of polyethylene terephthalate ($\eta$ sp/c = 0.76) in a biaxial screw extruder, then with a 30% amount of glass fiber in a uniaxial screw extruder. Results obtained by molding the thus obtained resin (in a 110°C metal mold) are shown in Table 5.

Examples 29—33

The same procedures as described in Example 28 were conducted except for changing diamine, dicarboxylic acid, and polyester for copolymerization. Results thus obtained are shown in Table 6 below.

Example 34

The same reaction as in Example 28 was carried out except for using 38.21 g of p-aminobenzoyl chloride hydrochloride as an aminocarboxylic acid component in place of the reaction product between the diamine component and the dicarboxylic acid component. Results thus obtained are shown in Table 5.

Example 35

The same procedures as in Example 34 were conducted except for using a mixture of 19.11 g of p-aminobenzoyl chloride hydrochloride and 19.11 g of m-aminobenzoyl chloride hydrochloride in place of p-aminobenzoyl chloride hydrochloride. Results thus obtained are shown in Table 5.

TABLE 5

| Example | DSC Tc | DSC ΔT | Metal Mold Temperature | Parting Properties | Appearance of Molding | Tensile Strength ($kg/cm^2$) |
|---|---|---|---|---|---|---|
| 24 | 213 | 5.8 | 100°C | A | A | 1550 |
| | | | 110°C | A | A | 1560 |
| 25 | 211 | 5.9 | 110°C | A | A | 1520 |
| 26 | 209 | 6.2 | 110°C | A | A | 1540 |
| 27 | 207 | 6.5 | 110°C | A | A | 1470 |
| 28 | 209 | 5.8 | 110°C | A | A | 1530 |
| 34 | 208 | 6.3 | 110°C | A | A | 1520 |
| 35 | 206 | 6.5 | 110°C | A | A | 1530 |

TABLE 6

| Example | Diamine Component | Dicarboxylic Acid Component | Polyester for Copoly-merization (molar ratio) | η sp/c | DSC Tc | DSC ΔT | Parting Properties | Appearance of Molding | Tensile Strength ($kg/cm^2$) |
|---|---|---|---|---|---|---|---|---|---|
| 29 | 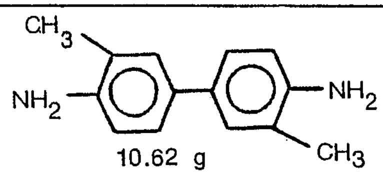 10.62 g 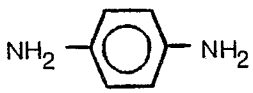 5.41 g | 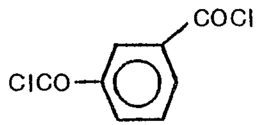 21.11 g | Polyethylene terephthalate/ adipate (70/30) 100 g | 0.39 | 210 | 6.1 | A | A | 1570 |
| 30 | 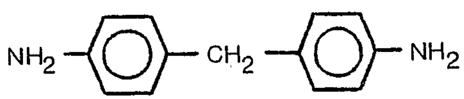 19.83 g | 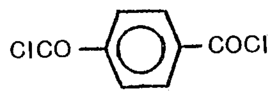 21.11 g | – do – | | 215 | 5.8 | A | A | 1580 |
| 31 | 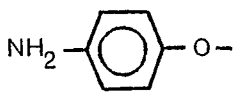 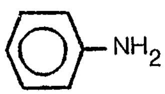 20.02 g | 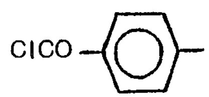 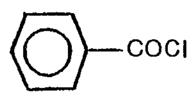 29.03 g | Polycapro-lactone 20 g (m.w. 5000) Polyethylene terephthalate/ sebacate (65/35) 80 g | 0.38 | 213 | 5.9 | A | A | 1550 |

TABLE 6 (Continued)

| Example | Diamine Component | Dicarboxylic Acid Component | Polyester for Copoly- merization (molar ratio) | $\eta_{sp/c}$ | DSC Tc | DSC ΔT | Parting Properties | Appearance of Molding | Tensile Strength ($kg/cm^2$) |
|---|---|---|---|---|---|---|---|---|---|
| 32 | 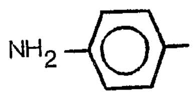<br>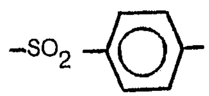<br>$-NH_2$ 24.80 g | 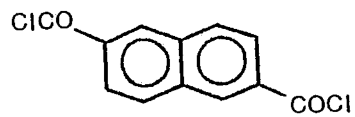<br>26.32 g | Polyethylene/ butylene terephthalate (60/40)<br>100 g | 0.35 | 208 | 6.3 | A | A | 1500 |
| 33 | 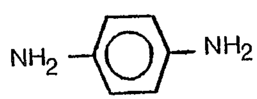<br>10.81 g | 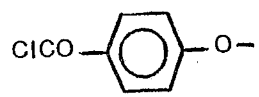<br>$-CH_2CH_2O-$<br>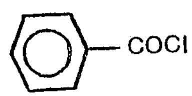 | Polyethylene terephthalate/ polytetra- methylene glycol copolymer (PTMG* 50%)<br>100 g | 0.45 | 212 | 6.1 | A | A | 1580 |

*PTMG represents polytetramethylene glycol.

Example 36

(1) A 1-liter reactor equipped with a high-speed stirrer was well dried by introducing hot dry nitrogen gas thereinto, and then cooled. 100 ml of dry, purified hexamethylphosphoramide, 150 ml of N-methyl-2-pyrrolidone, and 8 g of anhydrous lithium chloride were charged therein, and 2.25 g of p-phenylenediamine was added thereto and completely dissolved therein.

Then, this solution was cooled to 5—10°C and, under vigorous stirring, 4.70 g of terephthalic acid dichloride was added thereto. After reacting for about one hour, the temperature of the solution was raised to 30—40°C, reaction being continued for another one hour.

A part of the thus produced poly-p-phenyleneterephthalamide was taken out of the reaction system, precipitated in water, repeatedly washed with warm water, and dried for measuring viscosity. As a result, relative viscosity ($\eta$ rel) measured at 35°C as a 0.5 g/100 ml solution in 97% conc. sulfuric acid was found to be 1.65.

(2) 25 g of polytetramethylene glycol and 10 ml of triethylamine were added to the above-described reaction mixture, and block polymer-forming reaction was conducted at 50°C for one day and one night. After adding 20 g of a styrene-acrylonitrile copolymer (containing 5% acrylonitrile) to the reaction solution as a co-precipitating agent dispersing aid, the resulting mixture was poured into water. The precipitate thus formed was washed, dried, and kneaded with 300 g of polyethylene terephthalate ($\eta$ sp/c = 0.61). DSC measurement of the thus obtained composition revealed that Tc and ΔT measured at a cooling rate of 10°C/min were 211°C and 7.1°C, respectively. When this resin was molded in a 110°C metal mold, there were obtained moldings with good parting properties and good appearance (both evaluated as A).

Example 37

An aromatic polyamide solution was synthesized from 2.25 g of p-phenylenediamine and 4.6 g of terephthalic acid dichloride using the same reactor and solvents as used in Example 36. To the reaction mixture were added 8.1 g of adipic acid dichloride, 5.6 g of hexamethylenediamine, and 30 ml of triethylamine, and reaction was conducted for 5 hours. Then, 30 g of bishydroxyethyl terephthalate (polyethylene terephthalate oligomer) was added thereto and, after well mixing, the resulting mixture was poured into water. The precipitate thus formed was collected by filtration, washed, dried, and kneaded with 300 g of polyethylene terephthalate ($\eta$ sp/c = 0.82). DSC measurement of this composition revealed that Tc and ΔT measured at a cooling rate of 10°C/min were 212°C and 6.9°C, respectively. When this was molded in a 110°C metal mold, moldings were obtained with good parting properties and good appearance (both evaluated as A).

Example 38

4.2 g of 4,4′-diaminodiphenylmethane was reacted with 4.5 g of terephthalic acid dichloride in the same manner as in Example 36. Then, 8.8 g of N,N′-dimethylethylenediamine was added thereto, and 10 g of isophthalic acid dichloride, 10 g of terephthalic acid dichloride, and 20 ml of triethylamine were added thereto to conduct block polymer-forming reaction. After 5 hours, 10 g of neopentyl glycol dibenzoate was added thereto, and the resulting mixture was mixed with a solution of 30 g of polyethylene terephthalate in o-chlorophenol, and thrown into methanol. The precipitate thus formed was washed, dried, and kneaded with 300 g of polyethylene terephthalate ($\eta$ sp/c = 0.61). DSC measurement revealed that Tc and ΔT of this composition measured at a cooling rate of 10°C/min were 216°C and 7.3°C, respectively. When this was molded in a 110°C metal mold, moldings were obtained with good parting properties and good appearance (evaluated as A).

Example 39

(1) 400 ml of water, 6 g of thiourea, 80 ml of styrene, 20 ml of acrylonitrile, 5 ml of a 30% hydrogen peroxide aqueous solution, and 4 g of sodium laurylsulfate were mixed and subjected to polymerization for 18 hours at 50°C to synthesize a styrene-acrylonitrile copolymer having amino or hydroxy group at terminal ends. After completion of the reaction, the product was washed and dried.

(2) 16 g of this copolymer was charged in the same reactor as in Example 36 (and 250 ml of N-methylpyrrolidone and 150 ml of dimethylacetamide were added thereto as solvents to dissolve the copolymer. Then, 1.6 g of isophthalic acid dichloride and 1 ml of triethylamine were added thereto and, after stirring at 5°C for 1 hour, 0.82 g of m-phenylenediamine was further added thereto to conduct reaction for 3 hours. The resulting reaction mixture was mixed with a solution of 20 g of polyethylene terephthalate in o-chlorophenol, then thrown into methanol to precipitate. The precipitate thus formed was washed, dried, and kneaded with 200 g of polyethylene terephthalate. DSC measurement of this composition revealed that Tc and ΔT measured at a cooling rate of 10°C/min were 211°C and 7.1°C, respectively.

Example 40

(1) 19 g of p-aminobenzoic acid hydrochloride and 5 ml of triethylamine were charged and reacted for 3 hours using the same reactor and the same solvents as used in Example 36.

(2) Separately, 50 g of cellulose diacetate was dissolved in 250 ml of N-methylpyrrolidone, and 5 g of a sodium hydride dispersion was added thereto. After stirring the mixture for a while, the aromatic polyamide solution described in (1) was added thereto to conduct reaction for grafting the aromatic

polyamide to cellulose diacetate. After 2 hours, 25 g of cellulose triacetate was dissolved therein as a dispersing aid followed by pouring the mixture into water. The precipitate thus formed was washed, dried, and kneaded with 1000 g of polyethylene terephthalate. DSC measurement revealed that Tc and ΔT of this composition measured at a cooling rate of 10°C/min were 218°C and 6.1°C, respectively. When this was molded in a 110°C metal mold, moldings were obtained with good parting properties and good appearance (both evaluated as A).

Example 41

(1) 19 g of p-aminobenzoic acid hydrochloride was reacted in the same manner as in Example 40-(1).

(2) Separately, 0.2 g of azobisisobutyronitrile was added to a mixture of 50 g of methyl methacrylate, 14 g of butyl methacrylate, and 1 g of methacrylic acid chloride to react at 50°C for 4 hours. The reaction product was crushed in a dry box, and 30 g of the crushed product was charged in a 2-liter reactor and dissolved in 500 ml of dimethylacetamide. The aromatic polyamide solution obtained in (1) above was added thereto, and 10 ml of triethylamine was further added thereto to react for 4 hours. Thus, the aromatic polyamide was grafted to the methacrylate-methacrylic acid chloride copolymer. After the reaction, 40 g of polymethyl methacrylate was added thereto as a dispersing aid, and the resulting mixture was thrown into water. The precipitate thus formed was washed, dried, and kneaded with 930 g of polyethylene terephthalate. DSC measurement revealed that Tc and ΔT of this composition were 215°C and 6.9°C, respectively. When this was molded in a 110°C metal mold, moldings were obtained with good parting properties and good appearance (both evaluated as A).

Example 42

10.81 g of p-phenylenediamine (as a diamine component) was reacted with 21.11 g of terephthalic acid dichloride (as a dicarboxylic acid component) in the same manner as in Example 36-(1), using 1 liter of hexamethylphosphoramide, 1.5 liters of N-methylpyrrolidone, and 75 g of lithium chloride as solvents. Then, 70 g of polytetramethylene glycol (m.w. = 2000) was added thereto as a copolymerizable polymer, and 20 g of a sodium hydride dispersion was further added thereto to conduct reaction for one day. Then, 50 g of polyethylene terephthalate/sebacate (molar ratio of terephthalic acid to sebacic acid = 60/40) was added thereto to dissolve, 200 ml of methanol was added thereto, and the resulting mixture was thrown into a large amount of water. The precipitate thus formed was washed and dried. This was kneaded with 1.5 kg of polyethylene terephthalate (η sp/c = 0.76) in a biaxial screw extruder, then kneaded with a given amount of glass fiber in a uniaxial screw extruder. Results obtained by molding the thus obtained resin in a 110°C metal mold are shown in Table 7.

Example 43

The same procedures as in Example 38 were conducted on a 5-fold scale, provided that polyethylene terephthalate of 0.76 in η sp/c was used. After kneading in a biaxial screw extruder, the resulting blend was kneaded with a 30% amount of glass fiber in uniaxial screw extruder. Results obtained by molding the thus obtained resin in a 110°C metal mold are shown in Table 7.

Example 44

The same procedures as in Example 39 were conducted on a 10-fold scale, provided that polyethylene terephthalate of 0.72 in η sp/c was used. After kneading in a biaxial screw extruder, the resulting blend was kneaded with a 25% amount of glass fiber in a uniaxial screw extruder. Results obtained by molding the thus obtained resin in a 110°C metal mold are shown in Table 7.

Examples 45—48

(1) The same procedures as in Example 39-(1) were conducted except for using styrene alone. The resulting polystyrene having amino or hydroxy group at the terminal ends was used as a copolymerizable polymer in the following experiments.

(2) The same procedures as in Example 42 were conducted except for changing the diamine component and the dicarboxylic acid component and using the polystyrene described in (1) above as a copolymerizable polymer. Results thus obtained are shown in Table 8.

Examples 49—50

The same procedure as in Examples 45—48 were conducted except for using 38.20 g of p-aminobenzoic acid chloride hydrochloride in place of reacting the diamine component with the dicarboxylic acid component [Example 49]. Also, the procedures were conducted using 19.10 g of p-aminobenzoic acid chloride hydrochloride and 19.10 g of m-aminobenzoic acid chloride hydrochloride [Example 50]. Results thus obtained are shown in Table 8.

Examples 51—52

The same procedures as in Examples 40 and 41 were repeated on a 3-fold scale [Examples 51 and 52, respectively]. As the polyethylene terephthalate, polyethylene terephthalate of 0.72 in η sp/c was used. After kneading in a biaxial screw extruder, the resulting blend was kneaded with a 30% amount of glass

fiber using a uniaxial screw extruder. Results obtained by molding the thus obtained resin in a 110°C metal mold are shown in Table 7.

Example 53

The same procedures as in Example 51 were conducted except for using m-aminobenzoyl chloride hydrochloride in place of p-aminobenzoyl chloride hydrochloride and using polyethylene terephthalate/adipate (molar ratio of terephthalic acid to adipic acid = 60/40) as a dispersing aid. Results thus obtained are shown in Table 7.

Example 54

The same procedures as in Example 52 were conducted except for omitting butyl methacrylate and increasing the amount of methyl methacrylate to make up the amount of omitted butyl methacrylate. As a dispersing aid, polyethylene terephthalate/adipate (molar ratio of terephthalic acid to adipic acid = 60/40) was used in place of polymethylmethacrylate. Results thus obtained are shown in Table 7.

TABLE 7

| Example | DSC | | Glass Fiber % | Metal Mold Temp. | Parting Properties | Appearance of Molding | Tensile Strength (kg/cm$^2$) |
|---|---|---|---|---|---|---|---|
| | Tc | ΔT | | | | | |
| 42 | 209 | 7.1 | 30 | 110°C | A | A | 1610 |
| | | | 20 | 110°C | A | A | 1470 |
| 43 | 211 | 7.3 | 30 | 110°C | A | A | 1620 |
| 44 | 208 | 7.3 | 25 | 110°C | A | A | 1500 |
| 51 | 213 | 6.6 | 30 | 110°C | A | A | 1570 |
| 52 | 211 | 7.1 | 30 | 110°C | A | A | 1480 |
| 53 | 210 | 6.5 | 30 | 110°C | A | A | 1580 |
| 54 | 209 | 6.3 | 30 | 110°C | A | A | 1520 |

TABLE 8

| Example | Diamine Component | Dicarboxylic Acid Component | Glass Fiber (%) | DSC Tc | DSC ΔT | Parting Properties | Appearance of Molding | Tensile Strength ($kg/cm^2$) |
|---|---|---|---|---|---|---|---|---|
| 45 | 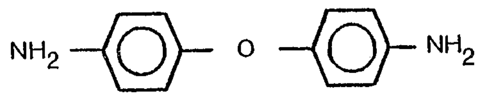 19.83 g | 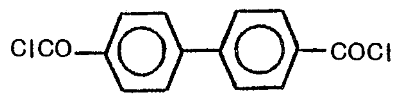 29.03 g | 30 | 209 | 6.3 | A | A | 1530 |
| | | | 20 | 210 | 7.1 | A | A | 1450 |
| 46 | 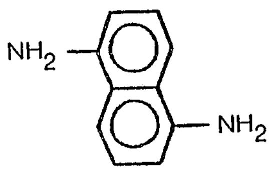 15.82 g | 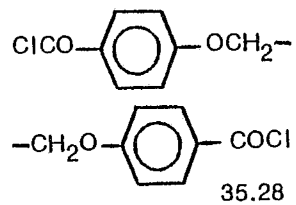 35.28 g | 35 | 211 | 6.9 | A | A | 1600 |
| 47 | 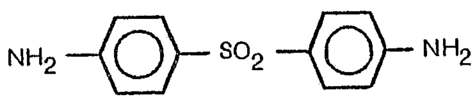 24.83 g | 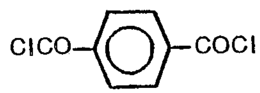 21.11 g | 30 | 213 | 6.3 | A | A | 1520 |
| 48 | — do — | 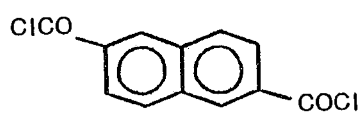 26.32 g | 40 | 207 | 6.5 | A | A | 1650 |
| 49 | 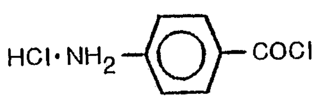 | 38.20 g | 30 | 207 | 6.5 | A | A | 1540 |

TABLE 8 (Continued)

| Example | Diamine Component | Dicarboxylic Acid Component | Glass Fiber (%) | DSC Tc | DSC ΔT | Parting Properties | Appearance of Molding | Tensile Strength ($kg/cm^2$) |
|---|---|---|---|---|---|---|---|---|
| 50 | 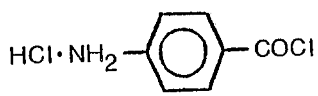 | 19.10 g | 30 | 206 | 6.7 | A | A | 1520 |
| | 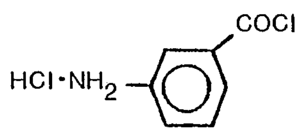 | 19.10 g | | | | | | |

Example 55

(1) A l-liter reactor equipped with a high-speed stirrer was well dried by introducing thereinto a hot dry nitrogen gas, and cooled. 100 ml of dry, purified hexamethylphosphoramide, 150 ml of N-methyl-2-pyrrolidone, and 8 g of anhydrous lithium chloride were charged therein and, after dissolving therein 9.7 g of isophthalic acid dihydrazide, the mixture was cooled to 5—10°C. Then, 10.2 g of terephthalic acid dichloride was added thereto under vigorous stirring. After stirring for 1 hour, 5.6 g of trans-2,5-dimethylpiperidine was added thereto to dissolve, and 10.2 g of terephthalic acid dichloride was added thereto followed by reacting for about 2 hours. The reaction mixture was then poured into a large amount of water containing sodium carbonate in a slight amount. A precipitate thus formed was separated, washed, and dried. The product showed an intrinsic viscosity of 1.6 dl/g in hexamethylphosphoramide.

10 g of the resulting polyamidohydrazide was dissolved in 200 ml of hexamethylphosphoramide, 20 g of bishydroxyethyl terephthalate (polyethylene terephthalate oligomer) and 10 g of dibutyl phthalate were added thereto as dispersing aids, and the resulting solution was mixed with a solution of 30 g of polyethylene terephthalate in o-chlorophenol under stirring. This mixture was added to a methanol/water mixture solution to form a precipitate. The precipitate thus formed was washed, dried, and kneaded with 480 g of polyethylene terephthalate. The resulting blend contained about 1.9% o-chlorophenol-insoluble polyamidohydrazide. DSC measurement revealed that Tc of this composition measured at a cooling rate of 10°C/min was 210°C, and that a sharp exothermic peak was shown in this temperature range with ΔT of 7.4°C. When this resin was molded in a 110°C metal mold, moldings were obtained with good parting properties and good appearance (both evaluated as A).

Example 56

6.0 g of ethylenediamine, 16 g of sodium hydroxide, and 2 g of sodium laurylsulfate were dissolved in 200 ml of distilled water and 50 ml of dichloromethane. 20.3 g of terephthalic acid chloride in dichloromethane was added thereto under stirring. Stirring was continued for 10 minutes. The resulting mixture was added to acetone, and the precipitate thus formed was collected by filtration, washed, and dried. The thus obtained polyamide had an intrinsic viscosity of 0.9 dl/g.

10 g of the polyamide was dissolved in 300 ml of dimethylacetamide and 15 g of lithium chloride, and the resulting solution was added to o-chlorophenol containing 50 g polyethylene terephthalate as a dispersing aid and vigorously stirred. This mixture was then mixed with a large amount of methanol, and the precipitate thus formed was collected by filtration, washed, dried, and kneaded with 650 g of polyethylene terephthalate. The thus obtained composition contained about 1.4% polyamide. DSC measurement revealed that Tc and ΔT of this composition measured at a cooling rate of 10°C/min were 215°C and 6.8°C, respectively. When this was molded in a 110°C metal mold, moldings were obtained with good parting properties and good appearance (both evaluated as A)

Example 57

(1) Polyamide (57-I) was prepared from 24.8 g of 4,4'-diaminodiphenylsulfone and 18.3 g of adipic acid dichloride, and polyamide (57-II) from 13.6 g of p-xylylenediamine and 18.3 g of adipic acid dichloride in the same manner as in Example 56.

(2) 5 g of each polyamide was dissolved in a solution of 200 ml of N-methylpyrrolidone and 10 g of calcium chloride. After mixing the solution with a solution of 30 g of polyethylene terephthalate (as a dispersing aid) in nitrobenzene, the resulting solution was poured into methanol. The precipitate thus formed was washed, dried, and kneaded with 200 g of polyethylene terephthalate. Polyamide content of the composition obtained from polyamide (57-I) was measured to be 2.1%, and that from polyamide (57-II) 2.1%. DSC measurement revealed that Tc and ΔT of the composition from polyamide (57-I) measured at a cooling rate of 10°C/min were 216°C and 6.2°C, respectively, and that Tc and ΔT of the composition from polyamide (57-II) were 213°C and 6.5°C, respectively. When these resins were molded in a 110°C metal mold, moldings were obtained with good parting properties and good appearance (both evaluated as A).

Example 58

The same reactor and the same solvents as used in Example 55 were used. 40 g of 3-aminocyclohexanecarbonylchloride hydrochloride was charged therein, and 10 ml of triethylamine was added thereto. After about 2 hours, the mixture was thrown into a large amount of water, and the precipitate thus formed was collected by filtration, washed, dried. 15 g of the resulting polyamide was dissolved in a solution of 400 ml of dimethylacetamide and 20 g of lithium chloride. Then, 10 g of poly-N,N'-dimethylethylenediamine terephthalate, 10 g of nylon 12, and 30 g of polymethyl methacrylate were dissolved therein as dispersing aids, and the resulting solution was mixed with a solution of 50 g of polyethylene terephthalate in o-chlorophenol followed by adding thereto methanol to precipitate. The precipitate thus formed was collected by filtration, washed, dried, and kneaded with 650 g of polyethylene terephthalate. DSC measurement revealed that Tc and ΔT of the thus obtained composition measured at a cooling rate of 10°C/min were 213°C and 6.6°C, respectively. When this was molded in a 110°C metal mold, there were obtained moldings with good parting properties and good appearance (both evaluated as A).

Example 59

A polyamide was prepared from 6.2 g of tetramethylenediamine and 14.2 g of terephthalic acid dichloride in the same manner as in Example 55.

5 g of this polyamide was dissolved in a solution of 200 ml of N-methylpyrrolidone and 10 g of lithium chloride, and 30 g of polyoxyethylene nonylphenol ether and 10 g of bishydroxyethyl terephthalate (polyethylene terephthalate oligomer) were added thereto as dispersing aids, and the resulting solution was thrown into water under vigorous stirring. The precipitate thus formed was collected by filtration, washed with successive, methanol and acetone, and finally dispersed in o-chlorophenol. 50 g of polyethylene terephthalate was dissolved therein, and the resulting mixture was poured into methanol. The precipitate thus formed was collected by filtration, dried, and kneaded with 250 g of polyethylene terephthalate. DSC measurement revealed that Tc and ΔT of the resulting composition measured at a cooling rate of 10°C/min were 216°C and 6.6°C, respectively. When this was molded in a 110°C metal mold, moldings were obtained with good parting properties and good appearance (both evaluated as A).

Example 60

A polyamide was prepared in the same manner as in Example 55 except for using 5.8 g of hexamethylenediamine and 10.2 g of terephthalic acid dichloride. 40 g of polymethyl methacrylate and 5 g of triphenyl phosphate were dissolved in the resulting polyamide solution as dispersing aids, and this solution was mixed with water under vigorous stirring. The precipitate thus formed was washed, dried, and kneaded with 960 g of polyethylene terephthalate. The resulting composition contained about 1.2% polyamide. DSC measurement revealed that Tc and ΔT of the composition measured at a cooling rate of 10°C/min were 213°C and 6.0°C, respectively. When this was molded in a 110°C metal mold, moldings were obtained with good parting properties and good appearance (both evaluated as A).

Example 61

The same reactor and the same solvents as used in Example 55 were used. 3 g of ethylenediamine was dissolved therein, and 10.6 g of terephthalic acid chloride was added thereto to react for 1 hour. Then, 20 g of polycaprolactone (as a copolymerizable polymer) and 5 ml of triethylamine were added thereto, and block polymer-forming reaction was conducted at 100°C for 24 hours. 40 g of styrene-acrylonitrile copolymer was added to the resulting solution as a dispersing aid followed by pouring the solution into water. The precipitate thus formed was collected by filtration, washed, dried, and kneaded with 950 g of polyethylene terephthalate. DSC measurement revealed that Tc and ΔT of the thus obtained composition measured at a cooling rate of 10°C/min were 213°C and 6.8°C, respectively. When this was molded in a 110°C metal mold, moldings were obtained with good parting properties and good appearance (both evaluated as A).

Example 62

Ethylenediamine was reacted with terephthalic acid chloride in the same manner as in Example 61, and 12.4 g of ethylene glycol and 8.5 g of a sodium hydride dispersion were added thereto. After one hour, 42.2 g of terephthalic acid dichloride was added thereto, and the reaction was continued for 4 hours. Then, 5 g of phenol was added thereto and, after reacting for 2 hours, the reaction mixture was poured into a large amount of methanol to form a precipitate. The precipitate was washed, dried, and kneaded with 600 g of polyethylene terephthalate. DSC measurement revealed that Tc and ΔT of this composition measured at a cooling rate of 10°C/min were 218°C and 5.9°C, respectively. When this was molded in a 110°C metal mold, moldings were obtained with good parting properties and good appearance (both evaluated as A).

Example 63

Ethylenediamine was reacted with terephthalic acid chloride in the same manner as in Example 61, and 8.8 g of N,N'-dimethylenediamine, 9.9 g of terephthalic acid dichloride, and 9.9 g of isophthalic acid dichloride to prepare a block copolymer between polyethylene terephthalamide and low-melting N-methylated polyamide. After conducting the reaction for 2 hours, the reaction mixture was poured into a large amount of water. The precipitate thus formed was washed, dried, mixed with 200 g of bishydroxyethyl terephthalate (polyethylene terephthalate oligomer), and charged in a 1-liter reactor. The mixture was gradually heated in a nitrogeneous atmosphere until the temperature finally reached 285°C under high vacuum to polymerize polyethylene terephthalate. Then, 450 g of polyethylene terephthalate was added to the resulting master batch followed by kneading the mixture. DSC measurement revealed that Tc and ΔT of the thus obtained composition measured at a cooling rate of 10°C/min were 212°C and 6.3°C, respectively. When this was molded in a 110°C metal mold, moldings were obtained with good parting properties and good appearance (both evaluated as A).

Example 64

(1) 300 g of styrene, 11.2 g of bis-4-aminophenyldisulfide, and 0.15 g of azobisisobutyronitrile were charged in a nitrogen-purged polymerization reactor, and polymerization was carried out at 50°C for 15 hours. The reaction mixture was poured into methanol, and the precipitate thus formed was collected by filtration, and washed.

(2) 15 g of the polystyrene obtained in (1) having amino group at the terminal ends was charged in the reactor used in Example 55, and a solution of 100 ml of N-methylpyrrolidone, and 6 g of lithium chloride was used as a solvent to dissolve the polystyrene. Then, 4.1 g of terephthalic acid dichloride and 2 ml of triethylamine were added thereto and, after reacting at 10°C for 1 hour, 1.2 g of ethylenediamine was further added thereto and the reaction was continued for 2 hours. 20 g of ethyl cellulose was added thereto as a dispersing aid, and a large amount of methanol was added thereto to form a precipitate. The precipitate thus formed was washed, dried, and kneaded with 200 g of polyethylene terephthalate. DSC measurement of this composition revealed that Tc and ΔT measured at a cooling rate of 10°C/min were 215°C and 6.6°C, respectively. When this was molded in a 110°C metal mold, moldings were obtained with good parting properties and good appearance (both evaluated as A).

Example 65

Ethylenediamine was reacted with terephthalic acid dichloride in the same manner as in Example 61. Then, 0.2 g of terephthalic acid dichloride was added, and 40 g of polytetramethylene glycol and 4 ml of triethylamine were added thereto to react at 50°C for one day and one night. 30 g of cellulose diacetate was added thereto as a dispersing aid, and the resulting mixture was poured into methanol. The precipitate thus formed was washed, dried, and kneaded with 500 g of polyethylene terephthalate. DSC measurement revealed that Tc and ΔT of the thus obtained composition measured at a cooling rate of 10°C/min were 210°C and 7.0°C, respectively. When this was molded in a 110°C metal mold, moldings were obtained with good parting properties and good appearance (both evaluated as A).

Example 66

(1) A polyamide was prepared from 20 g of 4-aminocyclohexanecarbonyl chloride hydrochloride in the same manner as in Example 58.

(2) Separately, 50 g of cellulose diacetate was dissolved in 250 ml of N-methylpyrrolidone, and 5 g of a sodium hydride dispersion was added thereto. After stirring the mixture for a while, the polyamide solution prepared in (1) was added thereto to conduct reaction of grafting the polyamide to the cellulose diacetate. After one hour, the reaction mixture was poured into methanol. The precipitate thus formed was collected by filtration, dried, and kneaded with 1,000 g of polyethylene terephthalate. DSC measurement revealed that Tc and ΔT of the thus obtained composition measured at a cooling rate of 10°C/min were 219°C and 6.1°C, respectively. When this was molded in a 110°C metal mold, moldings were obtained with good parting properties and good appearance (both evaluated as A).

Example 67

0.2 g of azobisisobutyronitrile was added to a mixture solution of 50 g of methyl methacrylate, 24 g of ethyl methacrylate, and 1 g of acrylic acid chloride, and reaction was conducted at 50°C for 4 hours. The reaction product was crushed in a dry box, charged in the same reactor as in Example 55, and dissolved in 500 ml of dimethylacetamide. 20 g of p-aminomethylbenzoyl chloride hydrochloride was added thereto, and 10 ml of triethylamine was further added thereto followed by reacting for 4 hours to graft the polyamide to the methacrylateacryloyl chloride copolymer. After the reaction, the reaction mixture was poured into water, washed, dried, and kneaded with 930 g of polyethylene terephthalate. DSC measurement revealed that Tc and ΔT of the thus obtained composition were 217°C and 6.1°C, respectively. When this was molded in a 110°C metal mold, moldings were obtained with good parting properties and good appearance (both evaluated as A).

Examples 68—80

The procedures in Examples 55—67 were conducted on a 3- to 10-fold scale (corresponding to Examples 68—80, respectively). As polyethylene terephthalate, those shown in Table 9 were used. After kneading the mixture in a biaxial screw extruder, the resulting blend was kneaded with a given amount of glass fiber in a uniaxial screw extruder. Results obtained by molding the thus obtained resins are given in Table 9.

TABLE 9

| Example | Scale of Experiment | η sp/c of PET | Glass Fiber (%) | Metal Mold Temp. (°C) | DSC Tc | DSC ΔT | Parting Proper-ties | Appearance of Molding | Tensile Strength (kg/cm²) |
|---|---|---|---|---|---|---|---|---|---|
| 68 | 5-fold scale of Ex. 55 | 0.82 | 35 | 100 | 213 | 6.9 | A | A | 1480 |
| 69 | 3-fold scale of Ex. 56 | 0.72 | 45 | 110 | 212 | 7.2 | A | A | 1620 |
| 70 | 6-fold scale Ex. 57 Polyamide (57-I) | 0.72 | 25 | 110 | 213 | 6.5 | A | A | 1430 |
| | -do- Polyamide (57-II) | 0.76 | 20 | 110 | 210 | 6.7 | A | A | 1370 |
| 71 | 3-fold scale of Ex. 58 | 0.76 | 30 | 110 | 209 | 7.0 | A | A | 1400 |
| 72 | 8-fold scale of Ex. 59 | 0.76 | 50 | 110 | 212 | 6.7 | A | A | 1630 |
| 73 | 3-fold scale of Ex. 60 | 0.76 | 35 | 110 | 211 | 6.2 | A | A | 1480 |
| 74 | 3-fold scale of Ex. 61 | 0.72 | 30 | 110 | 213 | 6.9 | A | A | 1560 |
| 75 | 4-fold scale of Ex. 62 | 0.82 | 30 | 110 | 218 | 5.9 | A | A | 1540 |
| 76 | 5-fold scale of Ex. 63 | 0.76 | 30 | 110 | 211 | 6.4 | A | A | 1580 |
| 77 | 10-fold scale of Ex. 64 | 0.72 | 30 | 110 | 214 | 6.6 | A | A | 1550 |
| 78 | 4-fold scale of Ex. 65 | 0.76 | 30 | 110 | 210 | 7.0 | A | A | 1530 |
| 79 | 3-fold scale of Ex. 66 | 0.76 | 30 | 110 | 218 | 6.1 | A | A | 1580 |
| 80 | 3-fold scale of Ex. 67 | 0.76 | 30 | 110 | 216 | 6.1 | A | A | 1520 |

### Examples 81—83

The same procedures as in Example 60 were conducted except for changing the diamine component, dicarboxylic acid component, and dispersing aid. After kneading the product with 2 kg of polyethylene terephthalate (η sp/c = 0.76) in a biaxial screw extruder, the resulting blend was kneaded with a 30% amount of glass fiber in a uniaxial screw extruder. Results obtained by molding the thus obtained resins are shown in Table 10. Additionally, polyethylene terephthalate/adipate used as a dispersing aid was a copolyester of 60/40 in a molar ratio of terephthalic acid to adipic acid, polyethylene terephthalate/sebacate a copolyester of 60/40 in a molar ratio of terephthalic acid to sebacic acid, and copolyester of polyethylene terephthalate/adipate and polytetramethylene glycol a polyester of 70/30 in a molar ratio of terephthalic acid to adipic acid and 20% in a content of polytetramethylene glycol (abbreviated as PET/AD/PTG).

### Example 84

The same procedures as in Example 64-(2) were conducted on a 10-fold scale except for changing ethylene diamine, terephthalic acid dichloride, and dispersing aid to those given in Table 10. After kneading

the product with 2 kg of polyethylene terephthalate (η sp/c = 0.76) in a biaxial screw extruder, the resulting blend was kneaded with a 30% amount of glass fiber in a uniaxial screw extruder. Results thus obtained by molding the resins are shown in Table 10. Additionally, the dispersing aid used here is the same as used in Example 81.

Example 85

The same procedures as in Example 61 were conducted except for changing the diamine component, dicarboxylic acid component, and copolymerizable polymer. After kneading the product with 2 kg of polyethylene terephthalate (η sp/c = 0.76) in a biaxial screw extruder, the resulting blend was kneaded with a 30% amount of glass fiber. Results obtained by molding the thus obtained resin are shown in Table 10. Additionally, the styrene-acrylonitrile copolymer was not used as a dispersing aid. As the copolymerizable polymer, 100 g of polyethylene terephthalate/adipate (molar ratio of terephthalic acid to adipic acid = 60/40; η sp/c = 0.39) was used.

Example 86

0.2 g of azobisisobutyronitrile was added to a mixture solution of 100 g of styrene, 25 g of methyl methacrylate, and 2 g of methacrylic acid chloride, and reaction was conducted at 50°C for 4 hours. The reaction product was pulverized in a dry box and dissolved in a 1.5 liters of dimethylacetamide. 6.01 g of ethylenediamine was added thereto, then 17.76 g of terephthalic acid dichloride was added thereto to conduct reaction at 10°C for 4 hours. Finally, 1.5 g of benzoic acid chloride was added thereto, and reaction was conducted for 2 hours. Then, 50 g of polyethylene terephthalate/sebacate (molar ratio of terephthalic acid to sebacic acid = 60/40) was dissolved therein as a dispersing aid followed by pouring the resulting mixture into water. The precipitate thus formed was washed, dried, kneaded with 2 kg of polyethylene terephthalate (η sp/c = 0.72) in a biaxial screw extruder, then kneaded with a 30% amount of glass fiber in a uniaxial screw extruder. Results thus obtained are shown in Table 10.

TABLE 10

| Example | Diamine Component | Dicarboxylic Acid Component | Dispersing Aid | Metal Mold Temp. (°C) | DSC Tc | DSC ΔT | Parting Properties | Appearance of Molding | Tensile Strength ($kg/cm^2$) |
|---|---|---|---|---|---|---|---|---|---|
| 81 | 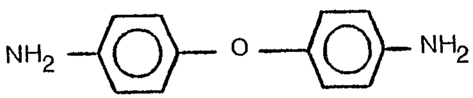 20.02 g | $ClCO-(CH_2)_4-COCl$ 18.30 g | Polyethylene terephthalate/adipate 100 g | 110 | 210 | 6.2 | A | A | 1570 |
| 82 | 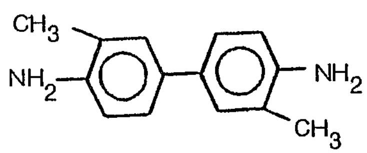 21.23 g | $ClCO-(CH_2)_4-COCl$ 18.30 g | Polyethylene terephthalate/sebacate 100 g | 110 | 208 | 6.5 | A | A | 1560 |
| 83 | $NH_2-(CH_2)_4-NH_2$ 88.82 g | 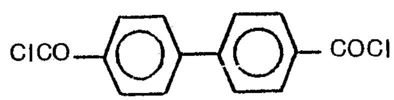 27.91 g | PET/AD/PTG 100 g | 110 | 209 | 6.5 | A | A | 1560 |
| 84 | 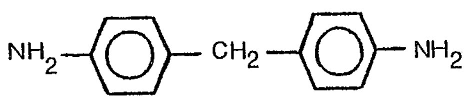 19.83 g | $ClCO-(CH_2)_4-COCl$ 19.04 g | Polyethylene terephthalate/adipate 100 g | 110 | 208 | 6.3 | A | A | 1580 |

TABLE 10 (Continued)

| Example | Diamine Component | Dicarboxylic Acid Component | Dispersing Aid | Metal Mold Temp. (°C) | DSC Tc | DSC ΔT | Parting Properties | Appearance of Molding | Tensile Strength ($kg/cm^2$) |
|---|---|---|---|---|---|---|---|---|---|
| 85 | $NH_2-CH_2CH_2-NH_2$<br>6.01 g | 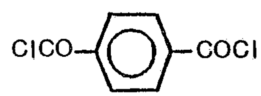<br>21.11 g | – | 110 | 213 | 5.9 | A | A | 1580 |
| 86 | $NH_2-CH_2CH_2-NH_2$<br>6.01 g | 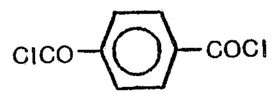<br>17.76 g | Polyethylene terephthalate/ sebacate<br>50 g | 110 | 209 | 6.4 | A | A | 1520 |

**Claims**

1. A polyester composition comprising:

(A) 100 parts by weight of a polyester comprising polyethylene terephthalate and having a reduced specific viscosity (η sp/c) of at least 0.3; and

(B) from 0.05 to 10 parts by weight of at least one compound selected from polyamides and polyhydrazides having a melting point of at least 270°C;

wherein said component (B) is uniformly dispersed in said component (A) in a size of 50 μm or less, and the half width of an exothermic peak of the polyester composition measured in a crystallization temperature range by a differential scanning calorimeter at a cooling rate of 10°C/min is 15°C or less per 8 mg of said component (A).

2. A composition as claimed in Claim 1, wherein said polyamides or polyhydrazides have a melting point of at least 300°C.

3. A composition as claimed in Claim 2, wherein said polyamides or polyhydrazides contain at least one of the following units:

the amido unit represented by the formula (I)

$$—NH—Ar_1—NH—CO—Ar_2—CO— \qquad (I)$$

wherein $Ar_1$ and $Ar_2$ represent a divalent aromatic group;

the amide unit represented by the formula (II)

$$—NH—Ar_3—CO— \qquad (II)$$

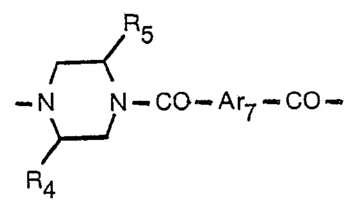

(VII)

wherein $Ar_7$ represents a divalent aromatic group, and $R_4$ and $R_5$ each represents hydrogen or a methyl group.

4. A composition as claimed in Claim 1, wherein said component (B) is a polyamide or polyhydrazide wherein a polyamido moiety, polyamidohydrazido moiety or polyhydrazido moiety having a melting point of higher than 270°C is bound to another polymer.

5. A composition as claimed in Claim 4, wherein said component (B) is a polyamide or polyhydrazide wherein a polyamido moiety, polyamidohydrazido moiety or polyhydrazido moiety having a melting point of higher than 300°C is bound to another polymer.

6. A composition as claimed in Claim 4 or 5, wherein said another polymer is a polyester, a polymethacrylate, a polystyrene or a cellulose derivative.

7. A composition as claimed in Claim 1, wherein said half width is 10°C or less.

8. A composition as claimed in Claim 1, containing from 0.1 to 5 parts by weight of component (B) per 100 parts by weight of component (A).

9. A composition as claimed in Claim 1, which further contains at least 2 to 200 parts by weight of (C) a reinforcing filler per 100 parts by weight of component (A).

10. A composition as claimed in Claim 9, wherein said reinforcing filler (C) is glass fiber.

11. A process for preparing a polyester composition as claimed in claim 1 which comprises dissolving or suspending said component (B) in a solvent, mixing therewith from 0.5 to 10 parts by weight of a dispersing aid per part by weight of said component (B), conducting co-precipitation of said component (B) and said dispersing aid, and dispersing the precipitate in said component (A).

12. A molded article produced by molding a polyester composition as claimed in any one of Claims 1 to 10 in a metal mold.

**Patentansprüche**

1. Polyester-Zusammensetzung, enthaltend:

(A) 100 Gewichtsteile eines Polyesters, der Polyethylenterephthalat umfaßt und eine reduzierte Viskosität (η sp/c) von mindestens 0.3 hat und

(B) 0.05 bis 10 Gewichtsteile mindestens einer Verbindung, die aus Polyamiden und Polyhydraziden mit einem Schmelzpunkt von mindestens 270°C ausgewählt ist;

wobei die Komponente (B) in der Komponente (A) in einer Größe von 50 μm oder weniger gleichförmig dispergiert ist und die Halbwertsbreite eines exothermen Peaks der Polyesterzusammensetzung gemessen im Kristallisationstemperaturbereich mit Hilfe eines Differential-Scanning-Kalorimeters bei einer

Kühlgeschwindigkeit von 10°C/min. 15°C oder weniger pro 8 mg der Komponente (A) beträgt.

2. Zusammensetzung nach Anspruch 1, in der die Polyamide oder Polyhydrazide einen Schmelzpunkt von mindestens 300°C haben.

3. Zusammensetzung nach Anspruch 2, in der die Polyamide oder Polyhydrazide mindestens eine der nachstehenden Einheiten enthalten:

die Amid-Einheit der Formel (I)

$$-NH-Ar_1-NH-CO-Ar_2CO- \quad (I)$$

in der $Ar_1$ und $Ar_2$ eine zweiwertige aromatische Gruppe darstellen;

die Amid-Einheit der Formel (II)

$$-NH-Ar_3-CO- \quad (II)$$

in der $Ar_3$ eine zweiwertige aromatische Gruppe bedeutet;

die Amid-Einheit der Formel (III)

$$-NH-Ar_4-NH-CO-R_1-CO- \quad (III)$$

in der $Ar_4$ eine zweiwertige aromatische Gruppe und $R_1$ eine zweiwertige Alkylgruppe mit bis zu 6 Kohlenstoffatomen oder eine zweiwertige Cycloalkylgruppe bedeuten;

die Amid-Einheit der Formel (IV)

$$-NH-R_2-NH-CO-Ar_5-CO- \quad (IV)$$

in der $Ar_5$ eine zweiwertige aromatische Gruppe und $R_2$ eine zweiwertige Alkylgruppe mit bis zu 6 Kohlenstoffatomen oder eine zweiwertige Cycloalkylgruppe bedeuten;

die Amid-Einheit der folgenden allgemeinen Formel (V)

$$-NH-R_3-CO- \quad (V)$$

in der $R_3$ eine zweiwertige Cycloalkylgruppe, eine zweiwertige Aralkylgruppe oder Cycloalkylmethylengruppe bedeutet;

die Hydrizid-Einheit der Formel (VI)

$$-NHNH-CO-Ar_6-CO- \quad (VI)$$

in der $Ar_6$ eine zweiwertige aromatische Gruppe oder eine zweiwertige Cycloalkylgruppe bedeutet;

die Amid-Einheit der Formel (VII)

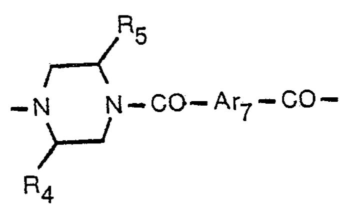

in der $Ar_7$ eine zweiwertige aromatische Gruppe und $R_4$ und $R_5$ jeweils Wasserstoff oder eine Methylgruppe bedeuten.

4. Zusammensetzung nach Anspruch 1, in der die Komponente (B) ein Polyamid oder Polyhydrazid ist, in dem ein Polyamid-Teil, Polyamidhydrazid-Teil oder Polyhydrazid-Teil mit einem Schmelzpunkt von mehr als 270°C an ein anderes Polymeres gebunden ist.

5. Zusammensetzung nach Anspruch 4, in der die Komponente (B) ein Polyamid oder Polyhydrazid ist, in dem ein Polyamid-Teil, Polyamidhydrazid-Teil, Polyhydrazid-Teil mit einem Schmelzpunkt von mehr als 300°C an ein anderes Polymeres gebunden ist.

6. Zusammensetzung nach Anspruch 4 oder 5, in der das andere Polymer ein Polyester, Polymethacrylat, Polystyrol oder ein Cellulosederivat ist.

7. Zusammensetzung nach Anspruch 1, in der die Halbwertsbreite 10°C oder weniger beträgt.

8. Zusammensetzung nach Anspruch 1, enthaltend 0.1 bis 5 Gewichtsteile der Komponente (B) pro 100 Gewichtsteile der Komponente (A).

9. Zusammensetzung nach Anspruch 1, die außerdem mindestens 2 bis 200 Gewichtsteile (C) eines verstärkenden Füllstoffes pro 100 Gewichtsteile der Komponente (A) enthält.

10. Zusammensetzung nach Anspruch 9, in der dieser verstärkende Füllstoff (C) Glasfaser ist.

11. Verfahren zur Herstellung einer Polyester-Zusammensetzung nach Anspruch 1, gemäß dem die Komponente (B) in einem Lösungsmittel gelöst oder suspendiert wird, damit 0.5 bis 10 Gewichtsteile eines Dispergierhilfsmittels pro Gewichtsteil der Komponente (B) vermischt werden, die gemeinsame Ausfällung der Komponente (B) und des Dispergierhilfsmittels durchgeführt wird und der Niederschlag in der Komponente (A) gelöst wird.

12. Formkörper, hergestellt durch Verformen einer Polyester-Zusammensetzung nach einem der Ansprüche 1 bis 10 in einer Metallform.

**Revendications**

1. Composition de polyester comprenant:

(A) 100 parties en poids d'un polyester comprenant du poly(téréphtalate d'éthylène) et ayant une viscosité spécifique réduite ($\eta$ sp/c) d'au moins 0,3; et

(B) de 0,05 à 10 parties en poids d'au moins un composé choisi parmi les polyamides et les polyhydrazides ayant un point de fusion d'au moins 270°C;

le constituant (B) étant dispersé uniformément dans le constituant (A) suivant une dimension de 50 microns ou moins, et la demi-largeur d'un pic exothermique de la composition de polyester mesurée dans la gamme de la température de cristallisation par un calorimètre à balayage différentiel, à une vitesse de refroidissement de 10°C/minute, est de 15°C ou est inférieure à cette valeur pour 8 mg du constituant (A).

2. Composition telle que revendiquée à la revendication 1, dans laquelle les polyamides ou les polyhydrazides ont un point de fusion d'au moins 300°C.

3. Composition telle que revendiquée à la revendication 2, dans laquelle les polyamides ou les polyhydrazides contiennent au moins l'un des motifs suivants:

le motif amido représenté par la formule (I)

$$—NH—Ar_1—NH—CO—Ar_2—CO— \quad (I)$$

dans laquelle $Ar_1$ et $Ar_2$ représentent un groupe aromatique divalent;

le motif amide représenté par la formule (II)

$$—NH—Ar_3—CO— \quad (II)$$

dans laquelle $Ar_3$ représente un groupe aromatique divalent;

le motif amido représenté par la formule (III)

$$—NH—Ar_4—NH—CO—R_1—CO— \quad (III)$$

dans laquelle $Ar_4$ représente un groupe aromatique divalent et $R_1$ représente un groupe alcoyle divalent ayant jusqu'à 6 atomes de carbone ou un groupe cycloalcoyle divalent;

le motif amido représenté par la formule (IV)

$$—NH—R_2—NH—CO—Ar_5—CO— \quad (IV)$$

dans laquelle $Ar_5$ représente un groupe aromatique divalent et $R_2$ représente un groupe alcoyle divalent ayant jusqu'à 6 atomes de carbone ou un groupe cycloalcoyle divalent;

le motif amido représenté par la formule développée suivante (V)

$$—NH—R_3—CO— \quad (V)$$

dans laquelle $R_3$ représente un groupe cycloalcoyle divalent, un groupe aralcoyle divalent ou un groupe cycloalcoylméthylène;

le motif hydrazido représenté par la formule (VI)

$$—NHNH—CO—Ar_6—CO \quad (VI)$$

dans laquelle $Ar_6$ représente un groupe aromatique divalent ou un groupe cycloalcoyle divalent;

le motif amido représenté par la formule (VII)

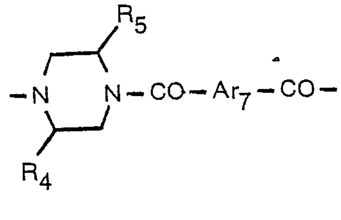

(VII)

dans laquelle $Ar_7$ représente un groupe aromatique divalent, et $R_4$ et $R_5$ représentent chacun l'hydrogène ou un groupe méthyle.

4. Composition telle que revendiquée dans la revendication 1, dans laquelle le constituant (B) est un polyamide ou un polyhydrazide, un radical polyamido, un radical polyamidohydrazido ou un radical polyhydrazido ayant un point de fusion supérieur à 270°C étant relié à un autre polymère.

5. Composition telle que revendiquée à la revendication 4, dans laquelle le constituant (B) est un polyamide ou un polyhydrazide, un radical polyamido, un radical polyamidohydrazido ou un radical polyhydrazido ayant un point de fusion supérieur à 300°C étant relié à un autre polymère.

6. Composition telle que revendiquée à la revendication 4 ou 5, dans laquelle l'autre polymère est un polyester, un polyméthacrylate, un polystyrène ou un dérivé de cellulose.

7. Composition telle que revendiquée à la revendication 1, dans laquelle la demi-largeur est de 10°C ou est inférieure à cette valeur.

8. Composition telle que revendiquée à la revendication 1 contenant de 0,1 à 5 parties en poids du constituant (B) pour 100 parties en poids du constituant (A).

9. Composition telle que revendiquée à la revendication 1, qui contient en outre au moins 2 à 200 parties en poids de (C) une charge de renforcement pour 100 parties en poids du constituant (A).

10. Composition telle que revendiquée à la revendication 9, dans laquelle la charge de renforcement (C) est de la fibre de verre.

11. Procédé de préparation d'un polyester tel que revendiqué à la revendication 1, qui consiste à dissoudre ou à mettre en suspension le constituant (B) dans un solvant, à y mélanger de 0,5 à 10 parties en poids d'un adjuvant de dispersion par partie en poids du constituant (B), à effectuer la comprécipitation du constituant (B), et de l'adjuvant de dispersion et à disperser le précipité dans le constituant (A).

12. Objet moulé produit en moulant une composition de polyester telle que revendiquée suivant l'une quelconque des revendications 1 à 10 dans un moule métallique.

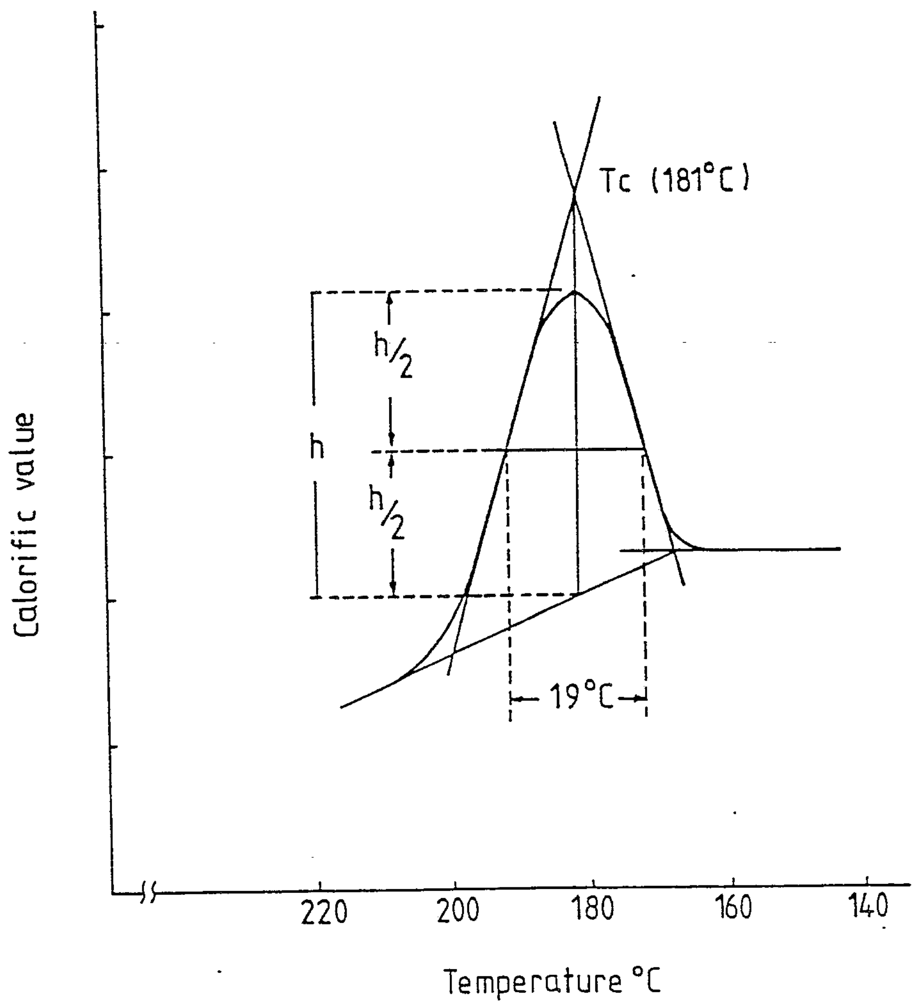
Tc (181°C)
h/2
h
h/2
19°C
Calorific value
220
200
180
160
140
Temperature °C